(19) Europäisches Patentamt
European Patent Office
Office européen des brevets

(11) EP 0 622 789 B1

(12) **EUROPÄISCHE PATENTSCHRIFT**

(45) Veröffentlichungstag und Bekanntmachung des Hinweises auf die Patenterteilung:
**07.08.2002 Patentblatt 2002/32**

(51) Int Cl.$^7$: **G11B 7/24**, C08F 220/36

(21) Anmeldenummer: **94104184.0**

(22) Anmeldetag: **17.03.1994**

(54) **Flächenhafte Gebilde aus Seitengruppenpolymeren**

Sheet-like structures containing side chain polymers

Structures encouche contenant des polymères à chaîne latérale

(84) Benannte Vertragsstaaten:
**CH DE FR GB IT LI NL**

(30) Priorität: **30.03.1993 DE 4310368**
**23.11.1993 DE 4339862**

(43) Veröffentlichungstag der Anmeldung:
**02.11.1994 Patentblatt 1994/44**

(73) Patentinhaber: **BAYER AG**
**51368 Leverkusen (DE)**

(72) Erfinder:
- **Stumpe, Joachim, Dr.**
**D-10405 Berlin (DE)**
- **Shibaev, Valery, Prof. Dr.**
**119899 Moskau B-234 (RU)**
- **Kostromin, Sergei, Dr.**
**119899 Moskau B-234 (RU)**
- **Ivanov, Sergei, Prof. Dr.**
**119899 Moskau B-234 (RU)**
- **Fischer, Thomas**
**D-10317 Berlin (DE)**
- **Läsker, Lutz, Dr.**
**D-10437 Berlin (DE)**
- **Ruhmann, Ralf, Dr.**
**D-12619 Berlin (DE)**
- **Claussen, Uwe, Dr.**
**D-51379 Leverkusen (DE)**

(56) Entgegenhaltungen:
**EP-A- 0 322 708**  **EP-A- 0 335 302**
**WO-A-92/02930**  **GB-A- 2 246 138**

- **MACROMOLECULES Bd. 25 , 1992 Seiten 2268 - 2273 A. MATASOHN 'azo polymers for reversible optical storage. 1.poly[4'[[2-(acryloyloxy )ethyl]ethylamino]-4-nitroazobenzene]'**
- **LIQUID CRYSTALS Bd. 11, Nr. 2 , 1992 , LONDON GB Seiten 251 - 267 U. WIESSNER ET AL. 'an infrared spectroscopic study of photo-induced reorientation in dye containing liquid-crystalline polymers'**
- **MACROMOL. CHEM., RAPID COMMUN. Bd. 12 , 1991 Seiten 81 - 87 J. STUMPE 'photoinduced optical anisotropy of liquid-crystalline side-chain polymers with azochromophores by linearly polarized light of low intensity'**
- **MAKROMOL. CHEM., RAPID COMMUN. Bd. 12 , 1991 Seiten 709 - 715 L.LÄSKER ET AL. 'laser-induced birefringence in homeotropic films of photochromic comb-shaped liquid-crystalline copolymers with azobenzene moieties at different temperatures'**
- **MAKROMOL. CEM., RAPID COMMUN. Bd. 8 , 1987 Seiten 467 - 471 M.EICH ET AL. 'erasable holograms in polymeric liquid crystals'**
- **DIE MAKROMOLEKULARE CHEMIE Bd. 183, Nr. 10 , 1982 Seiten 2311 - 2321 M. PORTUGALL ET AL. 'synthesis and phase behaviour of liquid crystalline polyacrylates'**

EP 0 622 789 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft flächenhafte Gebilde bestehend aus Seitengruppenpolymeren, die wenigstens eine photoinduzierbar konfigurationsveränderliche (1) und eine permanent formanisotrope, von (1) verschiedene Seitengruppe (2) enthalten, die über flexible Abstandsgruppen mit der Polymerhauptkette verbunden sind. Vor der Bestrahlung sind die erfindungsgemäßen flächenhaften Gebilde im Glaszustand der Polymeren optisch isotrop, amorph, transparent und nicht-lichtstreuend. Durch die Bestrahlung der flächenhaften Gebilde im Glaszustand der Polymere wird photochemisch eine Ausrichtung der Seitengruppen bewirkt, wodurch die flächenhaften Gebilde doppelbrechend und dichroitisch werden ohne ihre Transparenz zu verlieren. Die lichtinduzierte optische Anisotropie kann thermisch oder durch erneute Bestrahlung reversibel modifiziert oder aufgehoben werden.

Die Gebilde eignen sich, optische Informationen reversibel zu speichern und passive oder optisch schaltbare Komponenten herzustellen.

Aus der Literatur sind verschiedene Polymere mit photochromen Gruppen bekannt, deren optische Eigenschaften wie Absorption, Emission, Reflexion, Doppelbrechung oder Streuung mittels lichtinduzierter physikalischer und/oder chemischer Prozesse reversibel verändert werden. Eine interessante und neuartige Methode, die optischen Eigenschaften von Polymeren reversibel zu ändern, besteht in der lichtinduzierten Variation des Ordnungsgrades, der Orientierungsrichtung und der Orientierungsverteilung oder der Morphologie der Polymerfilme durch verschiedene Prozesse. Die lichtinduzierte Änderung der Ordnung in den Polymerfilmen dient zu Speicherung der Information.

So beschreiben Eich und Wendorff (Makromol. Chem., Rapid Commun. (1987) 8, 467) azobenzolhaltige flüssigkristalline Polymere. Diese bilden flüssigkristalline Domänen, in denen durch die Einwirkung des Lichtes nur die Gruppen umorientiert werden, die zuvor eine Isomerisierungsreaktion durchlaufen haben (Anderle, Birenheide, Wendorff, Makromol. Chem., Macromol. Symp. 44, 11-22 (1991)). Der Speichereffekt beruht auf der Störung des geordneten Zustands der Monodomäne durch die Umorientierung der photochromen Seitengruppen in einer ansonsten starren Matrix.

Stumpe et al. (Macromol. Chem., Rapid Commun., (1991), 12, S. 81-87) beschreiben die Bestrahlung von homöotropen Flüssigkristallen oder homogenen Monodomänen von Flüssigkristallen. Dies zeigt, daß immer, Materialien mit flüssigkristalliner Ordnung und keine amorphen Materialien verwendet werden. Hier kann zwar eine Anisotropie eingeschrieben werden, aber die Effekte sind nicht Langzeitstabil. Außerdem ist die Herstellung der einheitlich orientierten flüssigkristallinen Monodomänen in den Polymeren sehr aufwendig.

In jüngster Zeit sind darüber hinaus flüssigkristalline Polymere bekannt geworden, bei denen die photochemische Umorientierung der photochromen Gruppen eine kooperative Umorientierung auch nichtphotochromer Gruppen bewirkt, so daß die optische Achse der Monodomänen gedreht wird. (Ivanov, Yakovlev, Kostromin, Shibaev, Läsker, Stumpe, Kreysig, Makromol. Chem., Rapid Commun. 12, 709-715 (1991)).

Der gravierende Anwendungsnachteil der flüssigkristallinen Systeme besteht darin, daß ihre Verwendung generell eine perfekte, makroskopisch einheitliche Orientierung durch externe Felder und/oder Oberflächeneffekte zu einer Monodomäne voraussetzt.

Die Orientierung flüssigkristalliner Polymere durch elektrische und magnetische Felder sowie durch mechanische Kräfte und Oberflächeneffekte sind einerseits zwar eingeführte Methoden, andererseits jedoch technologisch außerordentlich aufwendig, so daß eine breite Anwendung derartiger Flächengebilde flüssigkristalliner Polymere bisher nicht möglich ist.

Ferner wurde gefunden, daß sich prinzipiell in einem amorphen System eine Doppelbrechung induzieren läßt (Anderle, Birenheide, Eich, Wendorff, Makromol. Chem., Rapid, Comm. (1989) 10, 477ff und EP 335 302). Allerdings ist der Effekt um Größenordnungen kleiner als der aus einer flüssig-kristallinen Monodomäne erhaltene und aus diesem Grund technisch nicht nutzbar.

Weiterhin ist bekannt (Natansohn, Rochon, Gosselin, Xie, Macromolecules 25, 2268-2273 (1992)), daß bestimmte Homopolymere bei der Bestrahlung mit Licht anisotrope Eigenschaften ausbilden können.

Ein derartiges System ist strukturell invariant, nicht langzeitstabil und in seinen Eigenschaften in weiten Grenzen festgelegt. Ein besonderer Vorteil der copolymeren Systeme gegenüber den einheitlichen Polymeren ist gerade ihre strukturelle Flexibilität, die die Anpassung der Eigenschaften an den jeweiligen Anwendungszweck unter Beibehaltung der informationsspeichernden Eigenschaften erlaubt.

Für die technische Verwertbarkeit photoadressierbarer Schichten wäre es von ganz erheblichem Vorteil, ein System zu haben, das sich einerseits wie ein optisch isotroper, amorpher, homogener Film handhaben läßt und andererseits über die überragenden dichroitischen und doppelbrechenden Eigenschaften eines flüssigkristallinen Polymerfilms verfügt, verbunden mit einer gewissen Bandbreite der Strukturvariation der Copolymere, um die übrigen Eigenschaften des Materials den jeweiligen technischen Erfordernissen anpassen zu können.

Aufgabe der Erfindung war die Bereitstellung eines Systems, das einerseits ein optisch isotropes flächenhaftes Gebilde liefert, der andererseits durch Einwirkung von Licht in einem Maße dichroitisch und doppelbrechend wird, wie dies von sehr guten flüssig-kristallinen Systemen bekannt ist.

Diese Aufgabe wird durch ein flächenhaftes Gebilde aus Seitengruppenco- und -terpolymere gelöst, die photochrome Seitengruppen und permanent formanisotrope Seitengruppen mit hoher Anisotropie der molekularen Polarisierbarkeit aufweisen, die im Gegensatz zu bisher bekannten photochromen flüssigkristallinen Polymeren und beschriebenen Lösungsvarianten technologisch variabel und leicht in optisch isotrope, transparente, nicht-lichtstreuende, amorphe flächenhafte Gebilde überführt werden können.

Da die Seitengruppenpolymere über eine Reihe von Strukturmerkmalen verfügen, Polymerhauptkette, unterschiedliche Seitengruppen, Abstandsgruppen zwischen der Hauptkette und den Seitengruppen, Endgruppen der Seitengruppen, und die Strukturelemente sich gegenseitig beeinflussen, kann keine feste Regel angegeben werden, bei welchen Strukturmerkmalen mit absoluter Sicherheit amorphe Flächengebilde entstehen. Für den Fachmann stehen aber eine Reihe von Möglichkeiten zur Verfügung, entweder durch geeignete Kombination von Strukturelementen die kinetische Unterdrückung der spontanen Ausbildung flüssigkristalliner Ordnungszustände zu ermöglichen, oder aber amorphe Polymere mit den Strukturelementen 1 und 2 herzustellen, die aus thermodynamischen Gründen keine flüssigkristallinen Ordnungszustände ausbilden, weil sie bestimmte Strukturelemente enthalten, die die Ordnungstendenz stören und für die weiter unten noch Beispiele angegeben werden.

Das Auffinden und gezielte Herstellen solcher amorphen Systeme ist nach einigen orientierenden Versuchen unter Berücksichtigung der im folgenden angegebenen Lehre mit ausreichender Sicherheit auf Erfolg leicht möglich.

Gegenstand der Erfindung sind daher flächenhafte Gebilde aus einem Polymer mit einer Hauptkette und von der Hauptkette abzweigenden Seitengruppen (Seitengruppenpolymer) das folgende Strukturmerkmale (1) bis (3) aufweist:

(1) das Seitengruppenpolymer enthält wenigstens eine photoinduzierbar konfigurationsveränderliche Seitengruppe;

(2) das Seitengruppenpolymer enthält wenigstens eine von (1) verschiedene permanent formanisotrope Seitengruppe mit hoher Anisotropie der molekularen Polarisierbarkeit;

(3) das Seitengruppenpolymer enthält zwischen Hauptkette und den Seitengruppen (1) und (2) flexible Abstandsgruppen;

dadurch gekennzeichnet, daß das flächenhafte Gebilde im Glaszustand der Seitengruppenpolymeren vor Bestrahlung optisch isotrop, transparent, nicht streuend und amorph und nach Bestrahlung transparent und durch eine im Glaszustand reversible lichtinduzierte Ausrichtung der Seitengruppen (1) und (2) langzeitstabil doppelbrechend und dichroitisch ist.

Photoinduzierbar konfigurationsveränderliche Gruppen sind z.B. Gruppen, die Doppelbindungen enthalten, deren cis- und trans-Konfiguration durch die Einwirkung von Licht ineinander überführbar sind. Diese Gruppen können zusätzlich eine hohe molekulare Formanisotropie aufweisen, die jedoch nicht permanent ist.

Permanent formanisotrope Gruppen sind z.B. Gruppen, die eine starre, stäbchenförmige Molekülgestalt (engl.: rod-like) haben, z.B. Bisphenylgruppen, Benzoesäureanilidgruppen oder Benzoesäurephenylestergruppen.

Thermodynamisch wird die Ausbildung flüssig-kristalliner Ordnungszustände dadurch unmöglich, daß das flächenhafte Gebilde aus Polymeren ein oder mehrere Strukturmerkmale (4) aus den Gruppen (a) bis (g) aufweist:

(a) es werden wenigstens zwei Arten von Abstandsgruppen (3) unterschiedlicher Länge eingebaut;

(b) wenigstens ein Teil der Abstandsgruppen (3) weist Heteroatome auf;

(c) wenigstens ein Teil der Abstandsgruppen (3) weist Verzweigungen auf;

(d) wenigstens ein Teil der Seitengruppen (1) oder (2) weist Verzweigungen auf;

(e) wenigstens ein Teil der Seitengruppen (1) oder (2) endet in verzweigten Endgruppen;

(f) wenigstens ein Teil der Monomerbausteine des Seitengruppenpolymers bildet keine flüssig-kristallinen Phasen aus;

(g) das Seitengruppenpolymer enthält eine weitere Seitengruppe (5), die keine permanente Formanisotropie aufweist.

Die Polymere sind insbesondere dadurch gekennzeichnet, daß sie die Strukturelemente 1 und 2 mit hoher

molekularer Formanisotropie und hoher Anisotropie der molekularen Polarisierbarkeit enthalten, daß jedoch die aus der Formanisotropie und anderen zwischenmolekularen Wechselwirkungen der Seitengruppen resultierende Tendenz der Ausbildung flüssigkristalliner Ordnungszustände durch die Strukturmerkmale a-g wirksam unterdrückt.

Die beanspruchten flächenhaften Gebilde verbinden damit die guten optischen Eigenschaften amorpher Filme und deren im Vergleich zu flüssigkristallinen Monodomänenfilmen signifikant vereinfachte technologische Herstellung mit hohen Werten der lichtinduzierten optischen Anisotropie, wie sie bisher nur in Monodomänen flüssigkristalliner Polymere bekannt waren.

Kinetisch kann die Ausbildung flüssigkristalliner Ordnungszustände in den beanspruchten flächenhaften Gebilden flüssigkristalliner Polymere dadurch unterdrückt werden,

- daß durch die Strukturelemente a-g die Ordnungstendenz der Polymere weitestgehend abgebaut wird und die Polymere nur noch geringe Phasenübergangsenthalpien aufweisen ($\Delta H<0{,}8$ J/g), oder

- daß durch sehr starke zwischenmolekulare Wechselwirkungen der Seitengruppen 1 und 2, in den Beispielen bei den Polymere mit Wasserstoffbrückenbildung und CT-Wechselwirkungen realisiert, die Ausbildung einer lichtstreuenden Polydomänenstruktur unterdrückt wird, oder

- daß durch eine hohe Viskosität der isotropen Polymerfilme oberhalb des Klärpunktes, in den Beispielen durch Polymere mit kurzen Spacern oder steifen Polymerhauptketten realisiert, ebenfalls die Ausbildung der lichtstreuenden flüssigkristallinen Polydomänenstruktur unterdrückt wird,

- die Polymere durch rasches Abkühlen aus der isotropen Schmelze in den Glaszustand zu optisch isotropen, homogenen, nicht lichtstreuenden Filmen eingefroren werden.

In einer weiteren bevorzugten Ausführungsform der Erfindung wird die Hauptkette des Seitengruppenpolymers von Monomeren, die die Seitengruppe (1) über Abstandsgruppe (3) tragen, von Monomeren, die die Seitengruppe (2) über Abstandsgruppen (3) tragen und gegebenenfalls weiteren Monomeren gebildet, wobei insbesondere der Anteil der Monomere, die die Seitengruppe (1) aufweisen, 10 bis 80 Mol-%, der Anteil der Monomere, die die Seitengruppe (2) aufweisen, 20 bis 90 Mol-% und der Anteil der weiteren Monomere 0 bis 50 Mol-% betragen.

Das flächenhafte Gebilde der Erfindung besteht bevorzugt aus einem Seitengruppenpolymer, bei dem die Hauptkette ein Poly-(meth)acrylat, ein Polysiloxan, ein Poly-α-Oxiran, ein Polyether, ein Polyamid, ein Polyurethan, ein Polyester oder ein Polycarbonat ist, die Seitengruppe (1) einschließlich der flexiblen Abstandsgruppe (3) der Formel (I) und die Seitengruppe (2) einschließlich der flexiblen Abstandsgruppe (3) der Formel (II) entsprechen:

$$-S_1-Q_1-P-X_1 \qquad (I)$$

$$-S_2-Q_2-M-X_2 \qquad (II)$$

worin

$S_1$, $S_2$ eine abstandshaltende Gruppe,

$Q_1$, $Q_2$ -O-, -CO-O-, -O-CO-, $-CO-NR_1-$, $-NR_1-CO-$ oder $-NR_1-$,

P eine photoinduzierbar konfigurationsveränderliche Gruppe,

M eine von P verschiedene, permanent formanisotrope Gruppe,

$X_1$, $X_2$ ein endständiger Substituent und

$R_1$ Wasserstoff oder $C_1$-$C_4$-Alkyl bedeuten.

Bevorzugt ist ein flächenhaftes Gebilde, bei dem

$S_1$, $S_2$ eine gegebenenfalls durch -O-, -NH- oder $-Si(R_5)_2-$ unterbrochene Gruppe $-(CH_2)_n-$,

n 2 bis 14,

P $-Ar(N{=}N{-}Ar)_m-$, $-ArN{=}CR_2{-}Ar-$, $-Ar{-}CR_2{=}N{-}Ar-$, $-Ar{-}CR_2{=}CR_3{-}COOR_4-$, $-AR{-}(CH{=}CH{-}Ar)_m$, $-ArCR_2{=}CR_3{-}Ar$, $-Ar{-}CR_2{=}CR_3{-}COR_4$ oder $-Ar{-}CR_2{=}CR_3$-Cyclohexyl,

$R_2$, $R_3$, $R_4$ H, $C_1$-$C_4$-Alkyl, CN, $OR_2$, $COOR_4$, Halogen, $NO_2$ oder $N(R_5)$,

$R_5$ H oder $C_1$-$C_4$-Alkyl,

Ar ein gegebenenfalls substituiertes aromatisches Ringsystem mit 5 oder 6 Ringgliedern,

m 1 oder 2,

M ein Derivat des Cholesterols oder des Cholestans oder eine der Gruppen -Ar-Ar-, -Ar-Y-Ar-, Ar-Y-Alk-, -Alk-Y-Ar-, -Alk-Ar- oder -Ar-Alk-,

Y -CO-O-, -OCO-, -CONH-, -NHCO-, -N=CH-, -CH=N-, -N-NO-, $-C(R_5)_2-$, $-C(R_5)_2{-}C(R_5)_2-$, -O- oder $-NR_1-$,

Alk eine geradkettige, verzweigte oder cyclische, gegebenenfalls substituierte, gegebenenfalls olefinisch ungesättigte aliphatische Gruppe mit 1 bis 14 C-Atomen,

$X_1$, $X_2$ Wasserstoff, CN, Alk, Y-Alk, Aryl, Y-Ar, $-N(Alk)_2$, Halogen oder $NO_2$ bedeuten,

insbesondere ein solches, bei dem die Hauptkette ein Poly(meth)acrylat ist,

P $-Ar{-}(N{=}N{-}Ar)_m-$, $Ar{-}CR_2{=}CR_3{-}Ar-$ oder $-Ar{-}CR_2{=}CR_3{-}COOR_4$,

M einen Rest des Biphenyls, eines Benzoesäureanilids oder eines Benzoesäurephenylesters,

$X_1$, $X_2$ H, CN, $C_1$-$C_8$-Alkyl, $C_1$-$C_8$-Alkoxy, $C_5$-$C_7$-Cycloalkoxy, Phenyl, Phenoxy, $C_1$-$C_4$-Di-alkylamino oder Nitro bedeuten.

Das Seitengruppenpolymer hat bevorzugt eine Glastemperatur Tg von $\geq 40°C$.

Die einzelnen Strukturelemente der Polymere sind an sich bekannt. Um die gewünschten Eigenschaftskombinationen zu erhalten, muß die konkrete molekulare Struktur der einzelnen Polymerbausteine in Relation zu den anderen im Polymer enthaltenen Strukturelementen stehen. Die konkrete Struktur einzelner Polymerbausteine ist daher in weiten Grenzen variabel. Die Eigenschaften dieser Polymerfilme, deren Eigenschaften maßgeblich durch schwache zwischenmolekulare Wechselwirkungen bestimmt werden, lassen sich nicht durch die Summierung der Eigenschaften der einzelnen molekularen Bausteine vorhersagen.

Entscheidend für die erfinderische Lösung ist die planvolle und zweckbestimmte Kombination der einzelnen Strukturelemente in den Polymeren, um die beanspruchten optisch isotropen flächenhaften Gebilde zu erhalten. In den beanspruchten flächenhaften Gebilden sind die Strukturelemente mit hoher Formanisotropie und hoher Anisotropie der molekularen Polarisierbarkeit die Voraussetzung für hohe Werte der optischen Anisotropie. Durch die Struktur der Polymere werden die zwischenmolekularen Wechselwirkungen der Strukturelemente (1) und (2) so eingestellt, daß die Ausbildung flüssigkristalliner Ordnungszustände unterdrückt wird und optisch isotrope, transparente nichtstreuende Filme hergestellt werden können. Andererseits sind die zwischenmolekularen Wechselwirkungen dennoch stark genug, daß bei Bestrahlung mit polarisiertem Licht, völlig überraschend und nicht vorhersehbar, ein photochemisch induzierter, kooperativer, gerichteter Umorientierungsprozeß der photochromen und der nichtphotochromen Seitengruppen bewirkt wird. Ebenso wird dadurch die Glastemperatur der Polymeren bestimmt, die ein Einfrieren der Ordnungszustände unterhalb $T_g$ gestattet.

Die erfindungsgemäß beanspruchten optisch isotropen flächenhaften Gebilde werden somit aus Seitengruppenpolymeren gebildet, deren morphologische, dynamische, photochemische und optische Eigenschaften durch die Kombination der Strukturelemente und die Einstellung der zwischen diesen bestehenden zwischenmolekularen Wechselwirkungen eine effiziente und langzeitstabile Induktion und Modifizierung optischer Anisotropie in amorphen flächenhaften Gebilden gestatten und an sich gegenläufige Eigenschaften kombinieren.

Bevorzugt treten zwischen den Seitengruppen (1) und (2) schwache Wechselwirkungskräfte auf, die ausreichen, daß die photoinduzierte Konfigurationsänderung der Seitengruppe (1) eine gleichgerichtete Umorientierung der Seitengruppe (2) bewirkt.

Überraschenderweise wurde gefunden, daß in den beanspruchten optisch isotropen amorphen flächenhaften Gebilden dieser photochromen Polymere extrem hohe Werte der optischen Anisotropie induziert werden konnten ($\Delta n = 0{,}01$ bis 0,2). Die Werte sind denen vergleichbar, die in Monodomänen flüssigkristalliner Polymere erhalten wurden oder sogar größer als diese. Sie sind signifikant größer im Vergleich zu amorphen Polymeren ohne diese Strukturelemente.

Durch den Einfluß von aktinischem Licht werden in den flächenhaften Gebilden Ordnungszustände generiert und modifiziert und damit die optischen Eigenschaften der flächenhaften Gebilde moduliert.

Als Licht wird vorzugsweise linear oder circular polarisiertes Licht verwendet, dessen Wellenlänge im Bereich der Absorptionsbande der photoinduzierbar konfigurationsveränderlichen Seitengruppen (1) liegt.

Die Herstellung der Seitengruppenpolymere und ihre Polymerisation werden nach literaturbekannten Verfahren durchgeführt (DD 276 297, DE 3 808 430, Makromolekulare Chemie 187, 1327-1334 (1984), SU 887 574, Europ. Polym. 18, 561 (1982) und Liq. Cryst. 2, 195 (1987)).

Die Herstellung perfekter makroskopisch einheitlicher Filme gelingt, ohne daß aufwendige Orientierungsverfahren unter Nutzung externer Felder und/oder von Oberflächeneffekten notwendig sind. Sie lassen sich durch Spincoating, Tauchen, Gießen oder andere technologisch leicht beherrschbare Beschichtungsverfahren auf Unterlagen aufbringen, durch Pressen oder Einfließen zwischen zwei transparente Platten bringen oder einfach als freistehenden Film durch Gießen oder Extrudieren präparieren. Solche Filme lassen sich durch schlagartiges Abkühlen, d.h. durch eine Abkühlungsrate von > 100 K/min, oder durch rasches Abziehen des Lösungsmittels auch aus flüssig-kristallinen Polymeren herstellen, die Strukturelemente im erfindungsgemäßen Sinne enthalten.

Die Schichtdicke liegt vorzugsweise zwischen 0,1 µm und 1 mm, besonders zwischen 0,5 und 100 µm.

Die lichtinduzierte Orientierung der Seitengruppen bzw. das Einschreiben von Information erfolgt durch Bestrahlung mit für die photoinduzierbar konfigurationsveränderliche Gruppe geeignetem aktinischem Licht. Dies führt zu einer winkelabhängigen Photoselektion, die eine Umorientierung der photochromen Gruppen und - durch einen kooperativen Effekt - eine kontinuierliche, gleichgerichtete Umorientierung der permanent formanisotropen Seitengruppen bis maximal senkrecht zum elektrischen Vektor des Anregungslichtes bewirkt.

Bei Einstrahlung von polarisiertem Licht in der Flächennormalen eines Films erhält man eine Vorzugsorientierung in der Filmebene, die im Falle von linear polarisiertem Licht im gesamten Film einheitlich ist, während bei Verwendung von circular polarisiertem Licht die Vorzugsrichtung entsprechend dem elektrischen Vektor des Anregungslichtes entlang der Flächennormalen periodisch moduliert wird. Bestrahlung mit unpolarisiertem Licht erzeugt eine Vorzugsorientierung senkrecht zur Filmebene.

Die Lichtexposition erfolgt flächig oder lokal mit linear oder circular polarisiertem, kohärenten oder nicht kohärenten, mono- oder polychromatischen Licht, dessen Wellenlänge im Absorptionsbereich der photoinduzierbar konfigurationsveränderlichen Seitengruppen liegt.

Die Information wird mit einem Laser punktförmig oder mit einem Laser oder eine Lampe flächig unstrukturiert oder unter Verwendung einer Maske bei einer Intensität von 0,1 bis 5.000 $mW/cm^2$ in einer Zeit zwischen 0,1 und 6000 sec. eingeschrieben.

Der Umorientierungsprozeß ist außerordentlich wirksam. Die erzielbare Doppelbrechungsänderung bei $T \ll T_g$ liegt vorzugsweise zwischen $\Delta n = 0{,}05$ bis 0,20.

Die hohen Werte der photochemisch induzierten Doppelbrechung und des photochemisch induzierten Dichroismus resultieren aus der molekularen Struktur der Seitengruppen, dem kooperativen Mechanismus der lichtinduzierten Orientierung zu einem Zustand gleicher makroskopischer Orientierung der photochromen und nichtphotochromen, aber permanent formanisotropen Seitengruppen sowie der Überwindung von Grenzen des Umorientierungsprozesses, wie sie in flüssigkristallinen Monodomänen bestehen, da die zwischenmolekularen Wechselwirkungskräfte des flüssigkristallinen Guest-Host-Systems die primär vorhandene Ordnung des geordneten Gebildes stabilisieren.

Die Vorzugsorientierung ist frei wählbar, sie hängt allein von der Wahl der Richtung des elektrischen Vektors des Anregungslichtes in Bezug auf den Polymerkörper ab. Das Ausmaß der Orientierung ist bei konstanter Temperatur und Wellenlänge allein von der eingestrahlten Energie abhängig, die entweder über die Zeit oder die Leistung der Lichtquelle variiert werden kann. Es sind somit die Orientierung, die Doppelbrechung und der Dichroismus frei wählbare Parameter, die sich unter gleichbleibenden Randbedingungen bei wiederholtem Einschreiben und Löschen exakt reproduzieren lassen. Die photochemisch induzierte optische Anisotropie bleibt nach dem Abschalten der Lichtquelle bei Temperaturen unterhalb der Glastemperatur des Polymeren langzeitstabil erhalten.

Die Effekte sind temperaturabhängig. Beim Vergleich der Effekte in verschiedenen Polymeren dient deren Glastemperatur Tg als Bezugspunkt. Die Größe der maximal induzierbaren optischen Anisotropie steigt bei Temperaturerhöhung zunächst an. Bei amorphen Polymeren sinkt sie im Bereich der Glastemperatur drastisch ab. Im Falle der amorph eingefrorenen flüssig-kristallinen Polymeren steigt sie auch oberhalb von Tg weiter mit der Temperatur, um schließlich in der Nähe des Klärpunkts ganz zu verschwinden. Dagegen sind die eingeschriebenen Informationen - unabhängig bei welcher Temperatur sie erzeugt wurden - und bei Lagerung der Polymerfilme bei Temperaturen $T < T_g$ über Jahre stabil.

In den Polymeren des erfindungsgemäßen flächenhaften Gebildes kann eine reproduzierbare, definierte, kontinuierlich durchstimmbare, langzeitstabile Doppelbrechung erzeugt werden. Sie läßt sich in Transmission oder Reflexion im polarisierten Licht als definierter Kontrast darstellen. Bei Verwendung von Polymeren, deren Seitengruppen dichroitische Eigenschaften haben, läßt sich entsprechend ein Dichroismus der Absorption oder der Emission reproduzierbar, definiert, kontinuierlich durchstimmbar und langzeitstabil erzeugen. Durch einheitliche Bestrahlungsbedingungen wird im gesamten Polymerfilm eine einheitliche Orientierung erzeugt. Bei lokaler Variation der Bestrahlungsbedingungen wie Energiedosis und Polarisationsrichtung wird ein hinsichtlich der Vorzugsorientierung der Seitengruppen strukturierter Film erzeugt, was zu Pixeln mit unterschiedlicher optischer Anisotropie führt.

Die erzeugten Orientierungen lassen sich durch Erwärmen der Polymeren über die Glastemperatur oder, falls sie thermotrope Mesophasen ausbilden, über den Klärpunkt ganz oder teilweise löschen. Die benötigte Energie kann thermisch oder mit einer geeigneten Lichtquelle zugeführt werden.

Die Vorzugsrichtung in der Orientierungsverteilung des optisch anisotropen Films kann auch durch Belichten mit unpolarisiertem aktinischem Licht wieder rückgängig gemacht und die optische Isotropie entlang der Flächennormalen wieder hergestellt werden. Erneute Bestrahlung mit der gleichen Quelle, jedoch veränderter Lage, des elektrischen Vektors in Bezug auf den Polymerfilm führt zu einer Modifizierung der Richtung und Größe der optischen Anisotropie. Auf diese Weise kann zwischen verschiedenen Zuständen bezüglich der Richtung und Größe der optischen Anisotropie wiederholt geschaltet werden.

Auf der Grundlage dieser Effekte steht mit den erfindungsgemäßen flächenhaften Gebilden ein Medium für die reversible, optische Datenspeicherung zur Verfügung. Wie bei der Herstellung der Filme entfallen auch nach dem Löschen der Information alle Maßnahmen zur Wiederherstellung der Monodomäne.

Die erfindungsgemäßen flächenhaften Gebilde lassen sich zur digitalen oder analogen Datenspeicherung im weitesten Sinne, beispielsweise zur optischen Signalverarbeitung, zur Fourier-Transformation und -Faltung oder in der kohärenten optische Korrelationstechnik, verwenden. Die laterale Auflösung wird durch die Wellenlänge des Ausleselichts begrenzt. Sie erlaubt eine Pixelgröße bis zu 0,5 μm. Der maximale Kontrast beträgt 1:200. Somit lassen sich in einem Pixel bis zu 100 Graustufen reproduzierbar einschreiben, wodurch die Speicherdichte bei digitaler Speicherung erhöht wird.

Diese Eigenschaft macht die erfindungsgemäßen flächenhaften Gebilde zur Verarbeitung von Bildern und zur Informationsverarbeitung mittels Hologrammen besonders geeignet, deren Reproduktion durch Ausleuchten mit einer Referenzwelle erfolgen kann. Analog läßt sich das Interferenzmuster zweier phasengleicher monochromatischer kohärenter Lichtquellen speichern und durch den Zusammenhang zwischen dem elektrischen Vektor des Lichts und der damit verbundenen Vorzugsrichtung im Speichermedium eine höhere Speicherdichte erzeugen. Entsprechend lassen sich dreidimensionale holographische Bilder speichern. Das Auslesen erfolgt durch Beleuchtung des Hologramms mit monochromatischem, kohärentem Licht. Bei der analogen Speicherung können Werte der Grauskala kontinuierlich und ortsaufgelöst eingestellt werden. Das Auslesen analog gespeicherter Information geschieht im polarisierten Licht, wobei man je nach Stellung der Polarisatoren das positive oder das negative Bild hervorholen kann. Hierbei kann einerseits der durch die Phasenverschiebung von ordentlichem und außerordentlichem Strahl erzeugte Kontrast des Films zwischen zwei Polarisatoren genutzt werden, wobei die Ebenen des Polarisators vorteilhaft einen Winkel von 45° zur Polarisationsebene des Einschreiblichts bilden und die Polarisationsebene des Analysators entweder senkrecht oder parallel zu der des Polarisators steht. Eine andere Möglichkeit besteht in der Detektion des durch induzierte Doppelbrechung verursachten Ablenkwinkels des Leselichts.

Die erfindungsgemäßen flächenhaften Gebilde lassen sich als optische Komponenten verwenden, die passiv oder optisch schaltbar sein können. So kann die hohe lichtinduzierte optische Anisotropie zur Modulierung der Intensität und/oder des Polarisationszustandes von Licht benutzt werden. Entsprechend kann man aus einem Polymerfilm durch holographische Strukturierung Komponenten herstellen, die Abbildungseigenschaften haben, die mit Linsen oder Gittern vergleichbar sind.

Besonders bevorzugte Seitengruppenpolymere entsprechend der Formel (III)

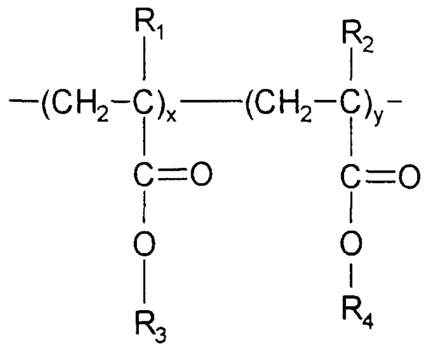

(III)

worin

$R_1$ und $R_2$ unabhängig voneinander H oder $CH_3$,

$R_3$

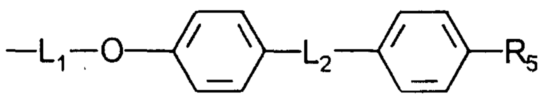

$R_4$

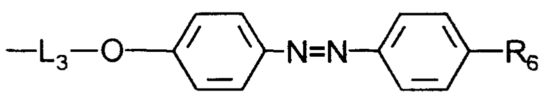

$L_1$ und $L_3$ unabhängig voneinander eine gegebenenfalls durch 1 bis 3 O-Atome unterbrochene Alkylengruppe mit 2 bis 14 C-Atomen

$L_2$ eine direkte Bindung, -CO-NH-, -NH-CO-, -CO-O- oder -O-CO-

$R_5$ und $R_6$ unabhängig voneinander einen Substituenten, insbesondere H, CN, $C_1$-$C_6$-Alkyl, $C_1$-$C_6$-Alkoxy, Di-$C_1$-$C_4$-alkylamino, Halogen oder Nitro und

x und y 0,1 bis 0,9 bedeuten,

wobei x + y = 1 und
die Monomerbausteine im Seitengruppenpolymer statistisch verteilt sind.

**Beispiele**

**A.Synthese der polymerisationsfähigen Monomeren**

**Beispiel 1**

4-Cyano-4'-(2-hydoxy-ethyloxy)-diphenyl

In einer Glasampulle werden nacheinander 3,0 g KOH, 10 g NC-$C_6H_4$-$C_6H_4$-OH und 6,15 g $ClCH_2CH_2$-OH in 50 ml Methanol gelöst. Die Ampulle wird mit Argon gefüllt, abgeschmolzen und 50 h bei 115°C gehalten. Nach Öffnung der Ampulle wird das Reaktionsgemisch in einem Scheidetrichter mit der 5-fachen Menge $CHCl_3$ versetzt und mit Wasser ausgeschüttelt. Nach dem Abtrennen wird die organische Phase mit $MgSO_4$ getrocknet.

Nach Abziehen des Lösungsmittels wird das Produkt chromatographisch gereinigt und danach einmal aus Benzol umkristallisiert.
Ausbeute: 10,4 g (85 % der Theorie)
F. 150°C

K 122°C N 126°C I

In diesem wie in den folgenden Beispielen haben die benutzten Abkürzungen folgende Bedeutungen:

F: Schmelzpunkt
K: Kristallin
G: Glaszustand
N: Nematische Phase
S: Smektische Phase
I: Isotrope Schmelze

Angaben in Klammern bezeichnen monotrope Phasen.

Analog wird 4-(6-Hydroxy-hexyloxy)-4'-cyanoazobenzol hergestellt.
Ausbeute: 9,4 g (58,5 % der Theorie)
F.: 150°C

**Beispiel 2**

4-Cyano-4'-(6-hydroxy-hexyloxy)-diphenyl

Ein Gemisch aus 25 ml Ethylmethylketon, 10 g $HO-C_6H_4-C_6H_4-CN$, 7,1 g $K_2CO_3$ und 13,9 g $HO-(CH_2)_6-Br$ wird unter Rühren am Rückfluß erhitzt bis zur vollständigen Umsetzung (Kontrolle durch Dünnschicht-Chromatographie). Dann wird der Niederschlag abfiltriert, das Lösungsmittel vollständig entfernt, das Produkt chromatographisch gereinigt und einmal aus Benzol umkristallisiert.
Ausbeute: 13,4 g (81 % der Theorie)
K 97°C S 112°C I

Analog wird 4-(2-Hydroxy-ethyloxy)-4'-cyanoazobenzol hergestellt.
Ausbeute: 1,5 g (36 % der Theorie)
F.: 184°C

**Beispiel 3**

4 -Cyano -4'-(2-acryloyloxy-ethyloxy)-diphenyl

Zu 2,8 g $NC-C_6H_4-C_6H_4-O-(CH_2)_2-OH$ in einem Gemisch aus 40 ml absolutem Benzol und 1,95 ml trockenem Triethylamin wird langsam unter Feuchtigkeitsausschluß bei Rühren und Erhitzen (60 bis 70°C) eine Lösung aus 1,4 ml $ClOC-CH=CH_2$ in 2 ml absolutem Benzol zugesetzt. Nach 2 h Rühren bei 60 bis 70°C verdünnt man das Reaktionsgemisch mit 200 ml $CHCl_3$, wäscht mit Wasser, trocknet mit $MgSO_4$ und dampft das Lösungsmittel ab. Das Produkt wird zweimal aus Methanol umkristallisiert.
Ausbeute: 2,67 g (78 % der Theorie)
F.: 97,2°C

Analog wird 4-Cyano-4'-(2-methacryloyloxy-ethyloxy)-diphenyl hergestellt.
Ausbeute: 1,4 g (69 % der Theorie)
F.: 86 bis 88°C

Analog wird 4-(2-Acryloyloxy-ethyloxy)-4'-cyanoazobenzol hergestellt.
Ausbeute: 0,67 g
F.: 133,7°C

Analog wird 4-(2-Methacryloyloxy-ethyloxy)-4'-cyanoazobenzol hergestellt.
Ausbeute: 0,78 g (89 % der Theorie)
F.: 139,5°C

Analog wird 4-Cyano-4'-(6-acryloyloxy-hexyloxy)-diphenyl hergestellt.
Ausbeute: 3,2 g (86,4 % der Theorie)
K 87,5°C (N 80°C) I

**Beispiel 4**

β-[4-(4'-Cyano)diphenyloxy]ethyl-β'-chlor-ethylether

Das Produkt wird aus $NC-C_6H_4-C_6H_4-OH$ und $ClCH_2CH_2-O-CH_2CH_2-Cl$ analog Beispiel 1 hergestellt.

Ausbeute: 7,8 g (50,5 % der Theorie)
F.: 58 bis 61°C

Analog wird 4-(β'-Chlorethyloxy-ethyl-β-oxy)-4'-cyanoazobenzol hergestellt.
Ausbeute: 4,6 g (42 % der Theorie)
F.: 95 bis 96°C

**Beispiel 5**

4-(β'-Methacryloyloxy-ethyloxy-ethyl-β-oxy)-4'-cyanoazobenzol

Zu einer Lösung von 2 g $Cl-CH_2CH_2-O-CH_2CH_2-O-C_6H_4-N=N-C_6H_4-CN$ in 10 ml trockenem Hexamethylphophorsäuretriamid wird 1,49 g (0,012 mol) trockenes Pulver von $H_2C=C(CH_3)COOK$ unter Rühren und Feuchtigkeitsausschluß zugesetzt. Nach 1 h Rühren bei Raumtemperatur und 1 h bei 70°C wird das Reaktionsgemisch in einem Scheidetrichter mit der 5-fachen Menge $CHCl_3$ versetzt und mit Wasser ausgeschüttelt. Nach dem Abtrennen wird die organische Phase mit $MgSO_4$ getrocknet. Nach Abziehen des Lösungsmittels wird das Produkt zweimal aus Methanol umkristallisiert.
Ausbeute: 1,9 g (84 % der Theorie)
F.: 74,0°C

Analog wird 4-(β'-Acryloyloxy-ethyloxy-ethyl-β-oxy)-4'-cyanoazobenzol hergestellt.
Ausbeute: 1,63 g (74 % der Theorie)
F.: 113,5 °C

Analog wird β[4-(4'-Cyanodiphenyl)oxy]-ethyl-β'-methacryloyloxy-ethyl-ether hergestellt.
Ausbeute: 6,63 g (76 % der Theorie)
F.: 64°C

Analog wird β[4-(4'-Cyanodiphenyl)oxy]-ethyl-β'-acryloyloxy-ethyl-ether hergestellt.
Ausbeute: 0,88 g (71 % der Theorie)
F.: 62°C

**Beispiel 6**

4-(6-Methacryloyloxyhexyloxy)-benzoesäure-4-n-methoxyanilid

55,4 g Methacrylsäure, 15 g 4-(6-Hydroxyhexyloxy)-benzoesäure, 2,25 g Hydrochinon, 2,25 g p-Toluolsulfonsäure und 150 ml Chloroform wurden unter Verwendung eines Wasserabscheiders 18 Stunden am Rückfluß gekocht und anschließend mit 1,66 g Natriumacetat-trihydrat in 5 ml Wasser versetzt. Chloroform und nicht umgesetzte Methacrylsäure wurden im Rotationsverdampfer abgezogen. Das Reaktionsprodukt wurde in 750 ml Chloroform aufgenommen und filtriert. Nach dem Waschen des Reaktionsproduktes mit 100 ml Wasser, Trocknen über Natriumsulfat und Filtrieren wurde bei -18°C ein kristallines Produkt erhalten, das filtriert, mit Toluol gewaschen und aus Toluol umkristallisiert wurde. Nach Trocknung wurden 15 g 4-(6-Methacryloyloxyhexyloxy)benzoesäure erhalten (F.: 92°C).

Diese wurden in 30 ml Thionylchlorid gelöst, mit einigen Tropfen N,N-Dimethylformamid und etwas 2,4-Ditert.-butylphenol versetzt und durch zweistündiges Rühren in das Säurechlorid überführt. Nach Abziehen des überschüssigen Thionylchlorids wurde das Produkt in 25 ml Chloroform aufgenommen und bei 0 bis 5°C zu einer gerührten Lösung von 1,85 g p-Anisidin und 3 ml Triethylamin in 50 ml Chloroform getropft. Es wurde 3 Stunden bei Raumtemperatur nachgerührt. Die Lösung wurde mehrfach mit Wasser gewaschen, über Natriumsulfat getrocknet und dann das Lösungsmittel abdestilliert. Das Reaktionsprodukt wurde aus Isopropanol umkristallisiert.
Ausbeute: 4,4 g (69 % der Theorie)
F.: 134 bis 135°C

Analog wird 4-(6-Methacryloyloxyhexyloxy)-benzoesäure-4-n-pentoxyanilid hergestellt.
Ausbeute: 4,4 g (71 % der Theorie)
F.: 132 bis 133°C

**Beispiel 7**

4-(6-Methacryloyloxyhexyloxy)-benzoesäure-4-cyanoanilid

12 g 4-(6-Methacryloyloxyhexyloxy)benzoesäure wurden analog zu Beispiel 6 in das Säurechlorid überführt. Diese wurde in 100 ml Benzol aufgenommen und bei Raumtemperatur unter Rühren zu einer Lösung von 4,6 g 4-Amino-benzonitril in 12,5 ml Pyridin und 125 ml Benzol getropft. Es wurde weitere 3 Stunden gerührt und das Reaktionsgemisch über Nacht stehen gelassen. Der Niederschlag wurde abfiltriert und aus Toluolen und Methanol umkristallisiert.
Ausbeute: 10,7 g (67,3 % der Theorie)
F.: 132 bis 133°C

**Beispiel 8**

4-(6-Methacryloyloxyhexyloxy)-benzoesäure-4-n-butoxyphenylester

6,1 g 4-(6-Methacryloyloxyhexyloxy)benzoesäure wurden analog Beispiel 6 in das Säurechlorid überführt. Dieses wurde in 100 ml trockenem Tetrahydrofuran (THF) aufgenommen und bei 0 bis 5 °C zu einer gerührten Lösung von 3,3 g Hydrochinonmonobutylether in 100 ml THF und 4 ml Triethylamin getropft. Es wurde drei Stunden bei Raumtemperatur nachgerührt und anschließend das ausgefallene Triethylaminhydrochlorid abfiltriert. Das Filtrat wurde zur Trockne eingedampft und der Rückstand in 50 ml Dichlormethan gelöst. Die Lösung wurde mehrmals mit Wasser gewaschen, mit Natriumsulfat getrocknet und dann das Lösungsmittel abdestilliert. Das erhaltene Rohprodukt wurde durch Säulenchromatographie und durch Umkristallisieren aus n-Hexan gereinigt.
Ausbeute: 6,3 g (66,7 % der Theorie)
F.: 57 bis 58°C

**Beispiel 9**

4-(2-Methacryloyloxyethyloxy)-azobenzol

Eine Mischung aus 0,4 mol 1,2-Dibromethan, 0,2 mol Kaliumcarbonat, 0,004 mol 4-Hydroxyazobenzol, einer Spur Kaliumiodid und 200 ml Aceton wurde durch Rühren 6 Stunden am Rückfluß erhitzt. Nach dem Abkühlen wurde filtriert. Der nach Abdestillieren des Lösungsmittels erhaltene Rückstand wurde aus Methanol umkristallisiert.
Ausbeute: 8,3 g (68 % der Theorie)
F.: 79 bis 85°C

Eine Mischung aus 11,4 g dieses Produkts und 0,075 mol Kalium-methacrylat wurde in 100 ml N,N-Dimethylformamid (DMF) zehn Stunden bei 60°C gerührt. Nach dem Abkühlen wurde mit Wasser verdünnt, der entstandene Niederschlag abfiltriert und an der Luft getrocknet. Die Reinigung des Rohprodukts erfolgte durch Säulenchromatographie und durch Umkristallisieren aus tert.-Butanol.
Ausbeute: 8,1 g (70 %)
F.: 65 bis 67°C

**B. Copolymerisation und Polymercharakterisierung**

**Beispiel 10**

Eine Lösung von 0,247 g 4-Cyano-4'-(2-methacryloyloxyethyloxy)-diphenyl und 0,076 g 4-(β'-Methacryloyloxy-ethyloxy-ethyl-β-oxy)-4'-cyanoazobenzol in 2,9 ml absolutem Benzol wurden nach gründlichem Spülen der Reaktionsgefäße und -mischungen mit Stickstoff durch Zusatz von 0,0064 g Azoisobuttersäurenitril (AIBN) als Polymerisationsinitiator bei 70°C zur Polymerisation gebracht. Die Reaktionszeit betrug 45 Stunden. Das Reaktionsprodukt wurde mit Ethanol ausgefällt, abfiltriert und in 1,2-Dichlorethan gelöst. Das aus der erneut filtrierten Lösung erhaltene Polymer wurde aus Ethanol umgefällt und im Vakuum bei 120°C getrocknet und entgast. Die Ausbeute betrug 95 % der Theorie.

In analoger Weise wurden durch Copolymerisation Polymere der Formel (IV) erhalten. Die Ergebnisse finden sich in Tabelle 1.

Tabelle 1

| Nr. | x | y | m | n | $R^1$ | Tg (°C) | Phase | Tc (°C) |
|---|---|---|---|---|---|---|---|---|
| 1 | 0,6 | 0,4 | 2 | 2 | H | 85 | LC | 106,2 |
| 2 | 0,6 | 0,4 | 2 | 6 | H | 67 | LC | 108,1 |
| 3 | 0,6 | 0,4 | 2 | 2 | $CH_3$ | 107 | LC | 127,7 |
| 4 | 0,6 | 0,4 | 2 | 6 | $CH_3$ | 93 | LC | 118,8 |

Tg ist die Glastemperatur, Tc die Klärtemperatur.

LC innerhalb der Spalte "Phase" bedeutet, daß das entsprechende Polymer unterhalb Tc flüssig-kristalline Phasen ausbildet.

Polymere der Formel (V) wurden in analoger Weise erhalten. Die Ergebnisse finden sich in Tabelle 2.

Tabelle 2

| Nr. | x | y | n | $R^1$ | Tg (°C) | Phase | Tc (°C) |
|---|---|---|---|---|---|---|---|
| 5 | 0,6 | 0,4 | 2 | $CH_3$ | 86 | amorph | -- |
| 6 | 0,8 | 0,2 | 6 | $CH_3$ | 68 | amorph | -- |
| 7 | 0,9 | 0,1 | 6 | $CH_3$ | 66 | amorph | -- |
| 8 | 0,6 | 0,4 | 6 | $CH_3$ | 62 | LC | 86 |

Polymere der Formel (VI) wurden in analoger Weise erhalten. Die Ergebnisse finden sich in Tabelle 3.

Tabelle 3

| Nr. | x | y | m | $R^1$ | Tg (°C) | Phase | Tc (°C) | $M_w$ (10g/mol) |
|---|---|---|---|---|---|---|---|---|
| 9 | 0,8 | 0,2 | 2 | $CH_3$ | 101 | amorph | -- | 2,12 |
| 10 | 0,6 | 0,4 | 2 | $CH_3$ | 88 | amorph | -- | 1,94 |
| 11 | 0,4 | 0,6 | 2 | $CH_3$ | 77 | amorph | -- | 1,67 |
| 12 | 0,2 | 0,8 | 2 | $CH_3$ | 67 | LC | 89,7 | 1,64 |
| 13 | 0,4 | 0,6 | 6 | $CH_3$ | 57 | LC | 102,4 | -- |
| 14 | 0,8 | 0,2 | 2 | H | 77 | LC | 91,3 | 2,20 |
| 15 | 0,6 | 0,4 | 2 | H | 70 | LC | 87,2 | -- |
| 16 | 0,4 | 0,6 | 2 | H | 60 | LC | 78,1 | -- |
| 17 | 0,2 | 0,8 | 6 | H | 54 | LC | 83,1 | -- |
| 18 | 0,4 | 0,6 | 6 | H | 43 | LC | 97,0 | -- |

**Beispiel 11**

Eine Lösung von 1,134 g 4-(6-Methacryloyloxyhexyloxy)-benzoesäure-4-n-methoxyanilid und 0,776 g 4-(2-Methacryloyloxyethyloxy)-azobenzol in 19 ml DMF wurde nach gründlichem Spülen der Reaktionsgefäße und -mischungen mit Stickstoff durch Zusatz von 0,0164 g AIBN als Polymerisationsinitiator bei 70°C zur Polymerisation gebracht. Die Reaktionszeit betrug 24 Stunden. Das Reaktionsprodukt wurde mit 500 ml Ethanol ausgefällt, abfiltriert und in 20 ml DMF gelöst. Das aus der erneut filtrierten Lösung erhaltene Polymer wurde aus Ethanol umgefällt und im Vakuum bei 120°C getrocknet und entgast. Die Ausbeute betrug 1,34 g (70 % der Theorie).

In analoger Weise wurden Polymere der Formel (VII)erhalten. Die Ergebnisse finden sich in Tabelle 4.

Tabelle 4

| Nr. | x | y | $R^2$ | Tg (°C) | Phase | Tc (°C) | $M_w$ ($10^4$g/mol) | $M_w$/Mn |
|---|---|---|---|---|---|---|---|---|
| 19 | 0,7 | 0,3 | $OC_5H_{11}$ | 75 | LC | 102 | 9,4 | 2,95 |
| 20 | 0,5 | 0,5 | $OC_5H_{11}$ | 81 | amorph | -- | 8,7 | 2,80 |
| 21 | 0,76 | 0,24 | CN | 97 | amorph | -- | 183,7* | 17,30* |

*Aufgrund von Aggregationen sind die unter den angegebenen Meßbedingungen erhaltenen Werte erhöht.

In analoger Weise wurden Polymere der Formel (VIII) erhalten. Die Werte sind in Tabelle 5 angegeben.

Tabelle 5

| Nr. | x | y | Tg (°C) | Phase | Tc (°C) |
|---|---|---|---|---|---|
| 22 | 0,7 | 0,3 | 55 | LC | 89 |
| 23 | 0,6 | 0,4 | 59 | LC | 83 |
| 24 | 0,5 | 0,5 | 63 | amorph | -- |
| 25 | 0,4 | 0,6 | 64 | amorph | -- |

Formel (IV)

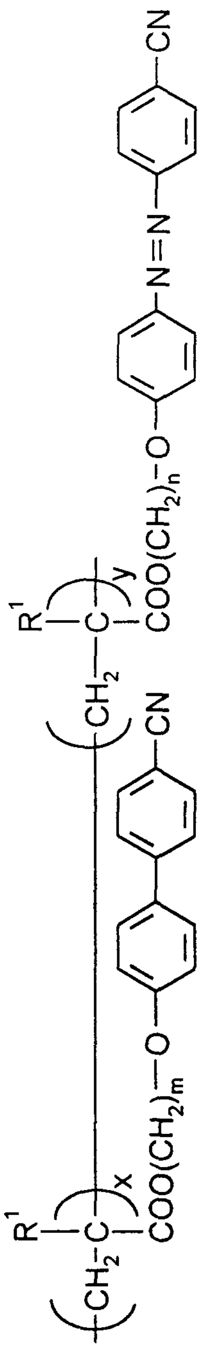

Formel (V)

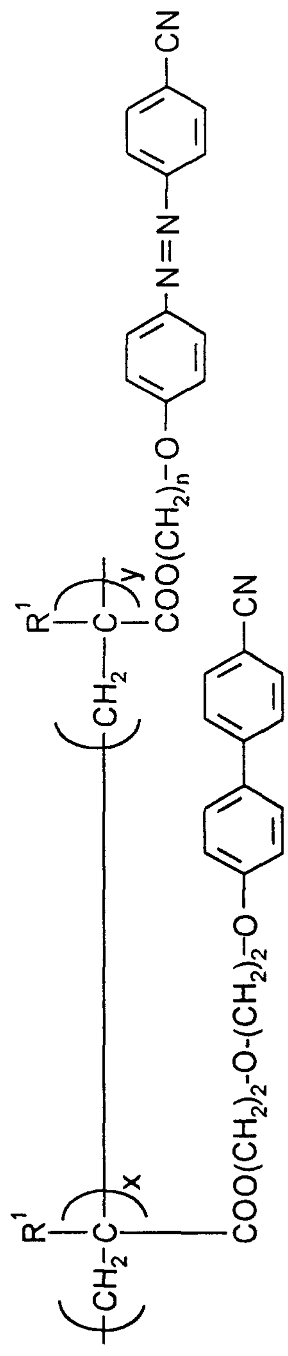

Formel (VI)

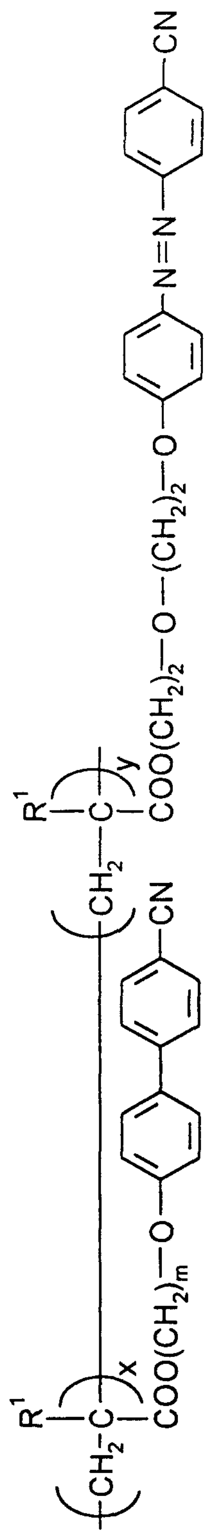

Formel (VII)

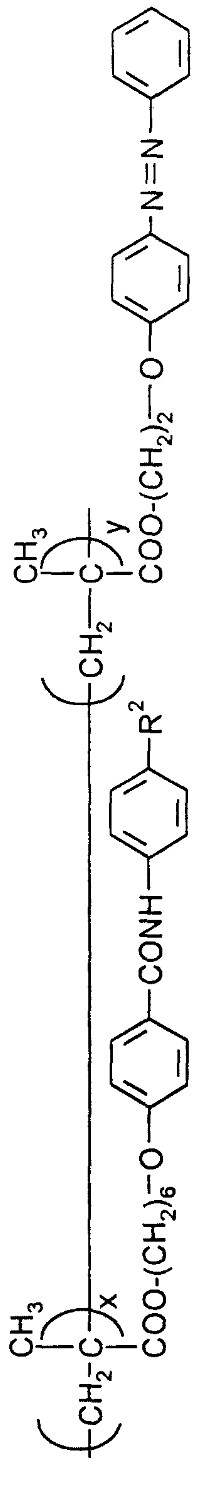

Formel (VIII)

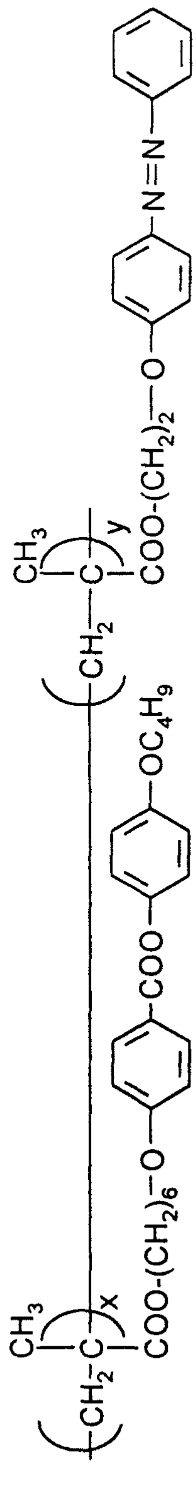

**Beispiel 12**

Die Zusammensetzung der erhaltenen Copolymere wurde durch Elementaranalyse und UV/Vis-Spektroskopie ermittelt.

Die Zahlenmittel $M_n$ und die Gewichtsmittel $M_w$ der Molekulargewichte wurden durch GPC-Messungen bestimmt. Die angegebenen Zahlen sind Relativwerte bezogen auf einen unter gleichen Bedingungen gemessenen Polystyrolstandard. Die $M_n$-Werte wurden zusätzlich durch Membranosmometrie bestimmt.

Die Ermittlung der Phasenübergangstemperaturen bzw. der Ausschluß der Existenz thermotroper Mesophasen erfolgte durch polarisationsmikroskopische Untersuchungen und DSC-Messungen. Letztere wurden auch zur Bestimmung der Glastemperaturen herangezogen.

**C) Präparation von amorphen Filmen**

**Beispiel 13**

Zwei Glasplatten wurden durch Polyimidfolie in einem Abstand von 15 µm gehalten und mit Hilfe von Epoxidharz fixiert.

Eine Schmelze des amorphen Polymers 5 wurde durch die Wirkung von Kapillarkräften bei 150°C zwischen die Platten gebracht.

Nach dem Abkühlen auf Raumtemperatur wurde ein transparenter, optisch völlig klarer, blasenfreier, nichtstreuender und optisch in allen Raumrichtungen isotroper Film erhalten.

Dieser amorphe Körper zeigte keine Doppelbrechung und wies unter dem Polarisationsmikroskop keine Domänenstruktur auf. Auch eine konoskopische Betrachtung zeigte, daß der Film optisch isotrop und somit amorph war.

Dieses Ergebnis wurde auch durch polarisierte UV-/Vis-Messungen und durch polarisierte IR-Messungen bestätigt. Der auf diese Weise ermittelte "Ordnungsgrad" des Polymeren betrug 0.

In analoger Weise wurden Filme der Polymeren 6, 7, 9 bis 11, 20 und 21 mit den beschriebenen Eigenschaften erhalten.

**Beispiel 14**

Eine Schmelze von Polymer 1 wurde durch die Wirkung von Kapillarkräften bei 150°C zwischen die wie in Beispiel 13 präparierten Platten gebracht.

Nach dem schlagartigen Abkühlen auf Raumtemperatur wurde ein transparenter, optisch völlig klarer, blasenfreier, nicht-streuender und optisch in allen Raumrichtungen isotroper Film erhalten.

Dieser amorphe Körper zeigte keine Doppelbrechung und wies unter dem Polarisationsmikroskop keine Domänenstruktur auf. Auch eine konoskopische Betrachtung zeigte, daß der Film optisch isotrop und somit amorph war.

Dieses Ergebnis wurde auch durch polarisierte UV-/Vis-Messungen und durch polarisierte IR-Messungen bestätigt. Der auf diese Weise ermittelte "Ordnungsgrad" des Polymeren betrug 0.

In analoger Weise wurden Filme der Polymeren 2 bis 4, 8 und 12 bis 19 mit den beschriebenen Eigenschaften erhalten.

**Beispiel 15**

Amorphe Filme des Polymers 19 auf Kieselglas- und Siliziumträgern wurden durch Spincoating hergestellt.

Eine Lösung von 4 Gew.-% des Polymers in THF wurden durch eine Fritte mit einer Porung von 10 µm filtriert.

Die als Trägermaterial für die Filme verwendeten Kieselglasscheiben und Siliziumwafer wurden vor der Beschichtung im Spincoater mit THF vorgespült.

Die Lösungen des Polymers wurden auf das ruhende Substrat aufgetragen, welches dann in Rotation versetzt wurde (5000 U/min; Zeit ca. 1 min).

Die Filme wurden 10 h im Dunklen unter einem lösungsmittelfreiem Gasstrom gelagert.

Auf diese Weise wurden transparente, optisch völlig klare Filme erhalten, die unter dem Polarisationsmikroskop keine Domänenstruktur oder Doppelbrechung aufwiesen. Konoskopische Untersuchungen zeigten, daß die Filme optisch isotrop und somit amorph waren. Polarisierte UV/Vis- (Glassubstrate) bzw. FTIR-Messungen (Si-Substrate) belegen diesen Befund. FTIR steht für Fourier-Transform Infrarot-Spektroskopie.

Die Schichtstärken der Filme wurden mit einem Talystep-Gerät vermessen. Sie betrugen ca. 500 nm.

In analoger Weise wurden Filme der Polymeren 1 bis 19 und 20 bis 24 mit den beschriebenen Eigenschaften auf Kieselglas- und Siliziumträgern erhalten. Die Schichtstärken wurden im Bereich von 400 bis 1000 nm durch Wahl der Konzentration und der Rotationsgeschwindigkeit eingestellt.

**Beispiel 16**

Ein amorpher Film des Polymers 20 wurde aus einer 20 gew.-%igen filtrierten Lösung des Polymers in THF hergestellt.

Ein Kieselglas-Substrat wurde mit dieser Lösung so beschichtet, daß es homogen und blasenfrei benetzt war. Anschließend wurde das Lösungsmittel langsam abgedunstet und die Platte für 10 h im Dunklen unter einem lösungsmittelfreien Gasstrom gelagert.

Die Schichtstärke betrug etwa 5 µm. Der Film war optisch klar und zeigte unter dem Polarisationsmikroskop

keine Domänenstruktur oder Doppelbrechung. Die konoskopische Betrachtung zeigte, daß der Film optisch isotrop und somit amorph war. Polarisierte UV/Vis-Messungen belegen diesen Befund.

**D) Wechselwirkung der amorphen Filme mit aktinischem Licht**

**Beispiel 17**

Das Polymere 19 wurde in einer wie im Beispiel 14 hergestellten Zelle mit dem linear polarisierten Licht eines $Ar^+$-Lasers ($\lambda$ = 488 nm, P = 100 mW/$cm^2$) bestrahlt. Während der Bestrahlung wurden UV/Vis-Spektren mit parallel und senkrecht zur Polarisationsebene des Anregungslichtes polarisiertem Meßstrahl aufgenommen. Dabei wurde festgestellt, daß sich nach ca. 7 Sekunden ein konstantes Verhältnis von E- und Z-Isomeren der Azobenzolchromophoren einstellt, welches durch weitere Bestrahlung nicht mehr verändert wird (photostationäres Gleichgewicht). Der detektierte Dichroismus der dem E-Isomeren zuzuordnenden Bande ($r = A_{\parallel}$ 365 nm / $A_{\perp}$365 nm) stieg während einer Bestrahlungszeit von 300 Sekunden kontinuierlich von r = 1 bis r = 1,9 an, wobei $A_{\parallel}$ 365 nm die Absorption in der Richtung senkrecht und $A_{\perp}$ 365 nm die Absorption parallel zur Polarisationsebene des $Ar^+$-Lasers bedeutet. Dies demonstriert, daß sich bei Bestrahlung mit linear polarisiertem Licht eine kontinuierliche Umorientierung der photochromen Gruppen vollzieht, die zur Herausbildung einer Vorzugsorientierung in der Filmebene führt.

Ein qualitativ analoges Verhalten zeigen unter diesen Bedingungen alle anderen Polymeren.

**Beispiel 18**

Das Polymer 20 wurde in einer wie im Beispiel 13 hergestellten Zelle mit unpolarisiertem Licht eines $Ar^+$-Lasers ($\lambda$ = 488 nm, P = 100 mW/$cm^2$) bestrahlt. Während der Bestrahlung wurden UV/Vis-Spektren mit in drei verschiedenen Richtungen (horizontal, vertikal und 45° zur Horizontalen) polarisierten Meßstrahlen aufgenommen. Im Bereich der dem E-Isomeren zuzuordnenden Bande war die Absorption jeweils unabhängig von der Polarisationsrichtung des Meßstrahls. Die Summe aller drei Absorptionen nahm während einer Bestrahlungsdauer von 300 Sekunden kontinuierlich ab. Dies demonstriert, daß sich bei Bestrahlung mit unpolarisiertem Licht eine kontinuierliche Umorientierung der photochromen Gruppen vollzieht, die zur Herausbildung einer Vorzugsorientierung senkrecht zur Filmebene führt.

**Beispiel 19**

Das Polymer 21 wurde in Form einer wie im Beispiel 15 hergestellten Schicht auf Si-Träger mit dem linear polarisierten Licht eines $Ar^+$-Lasers ($\lambda$ = 488 nm, P = 100 mW/$cm^2$) bestrahlt. Während der Bestrahlung wurden FTIR-Spektren mit parallel und senkrecht zur Polarisationsebene des Anregungslichtes polarisiertem Meßstrahl aufgenommen. Der dabei detektierte Dichroismus der der CN-Streckschwingung der Cyanogruppe der formanisotropen Seitengruppe zuzuordnenden Bande stieg während einer Bestrahlungszeit von 300 Sekunden kontinuierlich von r = 1 bis r = 1,9 an, wobei $r = A_{\parallel} / A_{\perp}$ und $A_{\parallel}$ das Integral der CN-Bande mit senkrecht zum Anregungslicht polarisiertem Meßstrahl und $A_{\perp}$ das Integral der CN-Bande mit parallel zum Anregungslicht polarisiertem Meßstrahl darstellen. Dies demonstriert, daß sich bei Bestrahlung mit linear polarisiertem Licht durch einen kooperativen Effekt die photoinduzierte Bewegung der photochromen Gruppen eine kontinuierliche, gleichgerichtete Umorientierung der formanisotropen, nicht-photochromen Seitengruppen bis maximal senkrecht zur Polarisationsebene des Anregungslichtes bewirkt.

Ein qualitativ gleiches Verhalten konnte für alle anderen Polymeren gefunden werden.

Dieser kooperative Effekt in Kombination mit der spezifischen Struktur der Polymeren bewirkt die im Vergleich mit anderen amorphen Polymeren besonders hohen Werte der induzierbaren Doppelbrechung bis zu 0,11, die bisher nur infolge makroskopischer Umorientierungsprozesse durch externe Felder in Flüssigkristallen beobachtet wurden.

**Beispiel 20**

Nach Ausführungsbeispiel 13 hergestellte amorphe Filme der Polymeren 5 bis 7, 10, 11 und 20 bis 25 und nach Ausführungsbeispiel 14 hergestellte amorphe Filme der Polymeren 1 bis 4, 8 und 12 bis 19 wurden im Glaszustand mit dem aufgeweiteten (d = 10 mm), linear polarisierten Lichtstrahl eines $Ar^+$-Lasers ($\lambda$ = 488 nm; P = 200 mW/$cm^2$) bestrahlt.

Während der Bestrahlung wurde die Doppelbrechung in der Filmebene mit Hilfe eines He/Ne-Lasers ($\lambda$ = 632,8 nm; P = 0,5 mW/$cm^2$) gemessen. Dabei stieg diese von $\Delta n = 0$ (amorpher Film) kontinuierlich an und strebte einem Grenzwert $\Delta n_{max}$ zu. Die Größe des Grenzwertes und die dazu notwendige Bestrahlungszeit war abhängig von der Polymerstruktur, der Temperatur des Films, der Schichtdicke sowie der Bestrahlungsleistung.

In Tabelle 6 sind exemplarisch die Grenzwerte der erzielten Doppelbrechung und die ermittelten Zeitkonstanten für einige der durchgeführten Experimente zusammengestellt.

Tabelle 6

| Polymer | P(mW/cm$^2$) | ϑ (°C) | $\Delta n_{max}$ | τ (s)* |
|---|---|---|---|---|
| 1 | 200 | 20 | 0,065 +/- 0,005 | 40 +/- 3 |
| 2 | 200 | 20 | 0,053 +/- 0,002 | 66 +/-3 |
| 3 | 200 | 20 | 0,066 +/- 0,002 | 50 +/- 2 |
| 4 | 200 | 20 | 0,052 +/- 0,002 | 150 +/- 20 |
| 5 | 200 | 20 | 0,047 +/- 0,004 | 30 +/- 3 |
| 6 | 200 | 20 | 0,039 +/- 0,001 | 210 +/- 10 |
| 7 | 200 | 20 | 0,033 +/- 0,002 | 1400 +/- 100 |
| 8 | 200 | 20 | 0,053 +/- 0,002 | 105 +/- 5 |
| 9 | 200 | 20 | 0,040 +/- 0,003 | 120 +/- 20 |
| 10 | 200 | 20 | 0,050 +/- 0,002 | 52 +/- 4 |
| 11 | 200 | 20 | 0,080 +/- 0,004 | 29 +/- 3 |
| 12 | 200 | 20 | 0,081 +/- 0,007 | 9 +/- 1 |
| 13 | 200 | 20 | 0,065 +/- 0,007 | 47 +/- 4 |
| 14 | 200 | 20 | 0,058 +/- 0,003 | 140 +/- 14 |
| 15 | 200 | 20 | 0,078 +/ 0,004 | 50 +/- 5 |
| 16 | 200 | 20 | 0,087 +/- 0,004 | 32 +/- 4 |
| 17 | 200 | 20 | 0,110 +/- 0,010 | 14 +/- 2 |
| 18 | 200 | 20 | 0,110 +/- 0,010 | 63 +/- 10 |
| 19 | 200 | 20 | 0,020 +/- 0,003 | 1280 +/- 100 |
| 19 | 200 | 50 | 0,040 +/- 0,004 | 240 +/- 20 |
| 20 | 200 | 20 | 0,025 +/- 0,002 | 550 +/- 50 |
| 20 | 200 | 50 | 0,040 +/- 0,005 | 240 +/- 20 |
| 21 | 200 | 20 | 0,025 +/- 0,002 | 320 +/- 30 |
| 21 | 200 | 50 | 0,040 +/- 0,005 | 150 +/- 10 |

* Die τ-Werte sind Konstanten, die sich bei einem Fit der Abhängigkeit der induzierten Doppelbrechung von der Bestrahlungszeit gemäß dem monoexponentiellen Ansatz Δn(t) = Δnmax* (1-e-(τ/τ)) ergeben.

Nach der Bestrahlung kam es zu einer schwachen Relaxation der Doppelbrechungswerte von $\Delta n_{max}$ auf $\Delta n_{stab}$, wobei stets

$$(\Delta n_{max}-\Delta n_{stab})/\Delta n_{max}<0,05$$

galt, wenn Tg-T>10K war. Während dreijähriger Lagerung bei Temperaturen unterhalb von Tg blieben die $\Delta n_{stab}$-Werte konstant.

Durch mikroskopische Betrachtung konnte qualitativ gezeigt werden, daß die erzeugte Anisotropie über die gesamte bestrahlte Fläche konstant war.

Die konoskopische Betrachtung des bestrahlten Films zeigte, daß in der Filmebene eine optische Achse induziert wurde, die senkrecht zur Polarisationsebene des aktinischen Lichtes liegt.

## Beispiel 21

Zehn nach Ausführungsbeispiel 13 hergestellte amorphe Filme des Polymers 20 wurden unter den im Beispiel

20 beschriebenen Bedingungen mit 10 verschiedenen Richtungen der Polarisationsebene bestrahlt. In jedem Falle wurde in den amorphen Filmen eine optische Achse induziert, die senkrecht zur Polarisationsebene des Anregungslichtes lag. Der in Bezug auf diese Achse induzierte Betrag der Doppelbrechung war bei ansonsten identischen Bestrahlungsbedingungen unabhängig von der Richtung der Polarisationsebene des Anregungslichtes. Dies demonstriert, daß die Richtung der Achsen der optischen Anisotropie durch die Wahl der Polarisationsebene des Anregungslichtes in Bezug auf den Polymerkörper beliebig einstellbar ist.

**Beispiel 22**

Ein wie im Beispiel 14 beschrieben präparierter 15 µm dicker Film des Polymers 19 wurde mit dem aufgeweiteten (d = 10 mm), linear polarisierten Lichtstrahl eines $Ar^+$-Lasers ($\lambda$ = 488 nm; P = 200 $mW/cm^2$) bestrahlt. Während der Bestrahlung wurde die Doppelbrechung gemessen. Die Bestrahlung wurde jeweils nach einer erzielten Doppelbrechungsänderung von 0,0004 unterbrochen, die Einstellung einer stabilen Doppelbrechung nach schwacher Relaxation abgewartet und anschließend weiter bestrahlt. Nach 100 solcher Schritte wr eine Doppelbrechung von 0,04 erreicht. Dies demonstriert, daß das Ausmaß der Orientierung des im Ausgangszustand amorphen Körpers von der Bestrahlungsdauer abhängt und somit beliebig einstellbar ist.

**Beispiel 23**

Acht wie im Beispiel 13 beschrieben präparierte 15 µm dicke Filme des Polymers 20 wurden mit dem aufgeweiteten (d = 10 mm), linear polarisierten Lichtstrahl eines $Ar^+$-Lasers ($\lambda$ = 488 nm) jeweils 300 s lang bestrahlt. Die Laserleistung wurde dabei variiert. Die dabei in den verschiedenen induzierten Doppelbrechungen sind in der folgenden Tabelle zusammengestellt.

| $P/mW/cm^2$ | 1 | 2 | 5 | 10 | 20 | 50 | 100 | 200 |
|---|---|---|---|---|---|---|---|---|
| $\Delta n$ | 0,0002 | 0,0004 | 0,0008 | 0,002 | 0,006 | 0,02 | 0,04 | 0,06 |

Dies demonstriert, daß das Ausmaß der Orientierung des im Ausgangszustand amorphen Körpers von der Leistung des Anregungslichtes abhängt und somit beliebig einstellbar ist.

**Beispiel 24**

Zwei wie im Beispiel 14 beschrieben präparierte 15 µm dicke Filme des Polymers 19 wurden mit dem aufgeweiteten (d = 10 mm), linear polarisierten Lichtstrahl eines $Ar^+$-Lasers ($\lambda$ = 488 nm) bis zum Erreichen einer induzierten Doppelbrechung von An = 0,02 bestrahlt. Die Bestrahlung des ersten Filmes erfolgte bei Raumtemperatur (ca. 45 K unterhalb der Glastemperatur). Zur Induktion der gewünschten Doppelbrechung war eine Bestrahlungsdauer von ca. 350 Sekunden notwendig. Der zweite Film wurde unmittelbar nach dem Beginn der Bestrahlung auf 80°C (ca. 10 K über der Glastemperatur) erwärmt. Die Induktion der gewünschten Doppelbrechung erforderte in diesem Fall nur ca. 70 Sekunden. Noch während der Bestrahlung wurde dieser Film wieder auf Raumtemperatur abgekühlt, wodurch die Relaxation nach Beenden der Bestrahlung der im Beispiel 20 beschriebenen entsprach. Dies demonstriert, daß die optische Anisotropie bei Temperaturen unterhalb der Glastemperatur oder kurzzeitig oberhalb der Glastemperatur eingeschrieben wird und im Glaszustand eingefroren wird.

**E) Gezielte Modifizierung der optischen Eigenschaften der Polymerkörper als Voraussetzung für eine Nutzung in der digitalen optischen Datenspeicherung**

**Beispiel 25**

Ein wie im Beispiel 14 beschrieben präparierter 15 µm dicker Film des Polymers 19 wurde bei Raumtemperatur mit dem linear polarisisierten Lichtstrahl eines $Ar^+$-Lasers ($\lambda$ = 488 nm; P = 100 $mW/cm^2$, d = 1 mm) an zehn verschiedenen Arealen verschieden lange bestrahlt. Die induzierte Doppelbrechung wurde gemessen. Anschließend wurde der Film über die Glastemperatur erwärmt und wieder auf Raumtemperatur abgekühlt. Dann wurde die Bestrahlung unter den gleichen Bedingungen durchgeführt. Die jeweils resultierenden Doppelbrechungen wichen für die gleiche Bestrahlungszeit um maximal 2 % des Absolutwertes voneinander ab. Dies demonstriert, daß im Polymeren eine reproduzierbare, definierte Doppelbrechung erzeugt wird, die unter Nutzung von zwei in definierter Lage zueinander und zum Polymerfilm befindlichen Polarisatoren zu einem definierten, auslesbaren Kontrast im Vergleich zum unbestrahlten Polymerfilm führt.

**Beispiel 26**

Ein wie im Beispiel 13 beschrieben präparierter 15 μm dicker Film des Polymers 20 wurde bei Raumtemperatur mit dem linear polarisisierten Lichtstrahl eines $Ar^+$-Lasers (λ = 488 nm; P = 100 mW/$cm^2$, d = 1 mm) an zehn verschiedenen Arealen mit zehn verschiedenen Richtungen der Polarisationsebene (10°-Schritte von horizontaler bis zu vertikaler Richtung) jeweils 300 Sekunden lang bestrahlt. Der Polymerfilm befand sich zwischen zwei gekreuzten Polarisatoren. Die Intensität eines senkrecht durch diese Anordnung strahlenden He/Ne-Lasers wurde gemessen. Anschließend wurde der Film über die Glastemperatur erwärmt und wieder auf Raumtemperatur abgekühlt. Dann wurde die Bestrahlung unter den gleichen Bedingungen wiederholt. Diese Prozedur wurde zehnmal hintereinander durchgeführt. Die nach den verschiedenen Bestrahlungen an den jeweils gleichen Arealen gemessenen Intensitäten des He/Ne-Laserstrahls wichen um maximal 2 % voneinander ab. Dies demonstriert, daß im Polymeren eine reproduzierbare, definierte Doppelbrechung erzeugt wird, die unter Nutzung von zwei in definierter Lage zueinander und zum Polymerfilm befindlichen Polarisatoren zu einem definierten, auslesbaren Kontrast im Vergleich zum unbestrahlten Polymerfilm und zu mit anderen Polarisationsebenen bestrahlten Arealen führt.

**Beispiel 27**

Ein wie im Beispiel 14 beschrieben präparierter 15 μm dicker Film des Polymers 19 wurde bei Raumtemperatur mit dem linear polarisisierten Lichtstrahl eines $Ar^+$-Lasers (λ = 488 nm; P = 100 mW/$cm^2$, d = 1 mm) an zehnmal unterschiedlich lange bestrahlt. Nach jeder Bestrahlung wurde die Anisotrope der Absorption UV/Vis-spektroskopisch ermittelt, der Polymerfilm über die Glastemperatur erwärmt und wieder auf Raumtemperatur abgekühlt. Dann folgte die nächste Bestrahlung. Die zehn Zyklen wurden dreimal wiederholt. Es konnte festgestellt werden, daß die gemessene Absorption bei jeder Polarisationsrichtung des Meßstrahls bei gleicher Bestrahlungsdauer maximal um 2 % voneinander abwichen. Die Anisotropie der Absorption wurde mit steigender Bestrahlungsdauer größer. Dieses Anwachsen war in guter Übereinstimmung mit dem Anwachsen der Doppelbrechung bei steigender Bestrahlungszeit (siehe Beispiel 22). Nach der letzten Bestrahlung wurde der Polymerfilm 6 Monate im Dunkeln bei Raumtemperatur gelagert, ohne daß sich die Absorpitons-Anisotropie signifikant änderte. Dies demonstriert, daß in den Polymeren ein reproduzierbarer, definierter, kontinuierlich durchstimmbarer, langzeitstabiler Dichroismus der Absorption erzeugt wird.

**Beispiel 28**

Ein wie im Beispiel 13 beschrieben präparierter 15 μm dicker Film des Polymers 20 wurde bei Raumtemperatur mit dem linear polarisisierten Lichtstrahl eines $Ar^+$-Lasers (λ = 488 nm; P = 100 mW/$cm^2$, d = 10 mm) zehnmal mit unterschiedlicher Polarisationsrichtung 300 Sekunden lang bestrahlt. Die Polarisationsrichtungen waren die gleichen wie die im Beispiel 26. Nach jeder Bestrahlung wurde die Anisotropie der Absorption UV/Vis-spektroskopisch ermittelt, der Polymerfilm über die Glastemperatur erwärmt und wieder auf Raumtemperatur abgekühlt. Dann folgte die nächste Bestrahlung. Die zehn Zyklen wurden dreimal wiederholt. Es konnte festgestellt werden, daß die Beträge der gemessenen Anisotropien der Absorption bei allen 40 Bestrahlungen um maximal 2 % voneinander abwichen. Die Richtung der Maximalabsorption lag jeweils senkrecht zur Polarisationsrichtung des Anregungslichtes, die der Minimalabsorption parallel dazu. Vor der ersten Bestrahlung und nach dem Erwärmen und anschließenden Abkühlen des Polymerfilms konnte kein Dichroismus nachgewiesen werden. Dies demonstriert, daß in den Polymeren ein reproduzierbarer, definierter Dichroismus der Absorption erzeugt wird, der in Transmission als definierte Anisotropie der Absorption des Polymerfilms ausgelesen wird und der sich von dem für den unbestrahlten Polymerfilm oder den mit anderen Polarisationsrichtungen bestrahlten Arealen unterscheidet.

**Beispiel 29**

Ein wie im Beispiel 14 beschrieben präparierter 15 μm dicker Film des Polymers 19 wurde bei Raumtemperatur mit dem linear polarisisierten Lichtstrahl eines $Ar^+$-Lasers (λ = 488 nm; P = 100 mW/$cm^2$, d = 10 mm) zehnmal mit unterschiedlicher Polarisationsrichtung 300 Sekunden lang bestrahlt. Nach jeder Bestrahlung wurde die induzierte Doppelbrechung gemessen und der Polymerfilm unter dem Mikroskop orthoskopisch und konoskopisch betrachtet. Anschließend wurde der Film über die Glastemperatur erwärmt und wieder auf Raumtemperatur abgekühlt. Dann wurde die Bestrahlung unter den gleichen Bedingungen mit um 10° geänderter Polarisationsrichtung wiederholt. Der Betrag der Doppelbrechung und das mikroskopische Erscheinungsbild des Films war über die gesamte bestrahlte Fläche konstant. Nach den einzelnen Bestrahlungen unterschieden sich die optische Eigenschaft des Polymerfilms nur durch die Richtung der erzeugten optischen Anisotropie entsprechend der gewählten Richtung der Polarisationsebene des Anregungslichtes. Dies demonstriert, daß im gesamten Polymerfilm durch einheitliche Bestrahlungsbedingungen eine einheitliche Orientierung erzeugt werden kann.

**Beispiel 30**

100 verschiedene Stellen eines wie in Beispiel 14 beschrieben präparierten Filmes des Polymers 19 wurden mit dem linear polarisierten Lichtstrahl eines $Ar^+$-Lasers ($\lambda$ = 488 nm, P = 100 mW/cm$^2$, d = 10 µm) unterschiedlich lange bestrahlt. Es entstanden Pixel mit unterschiedlichen Werten der Doppelbrechung. Die Bestrahlungszeiten wurden so gewählt, daß die $\Delta$n-Werte resultierenten, die bereits in Beispiel 22 angegeben wurden. Dies demonstriert, daß durch pixelweise Variation der Bestrahlungsdauer ein hinsichtlich der lokalen Vorzugsorientierung der Seitengruppen strukturierter Film erzeugt wird.

**Beispiel 31**

Ein Feld von 8 mal 8 Punkten (Durchmesser jeweils 10 µm) auf einem wie in Beispiel 13 beschrieben präparierten Filme des Polymers 19 wurde mit dem linear polarisierten Lichtstrahl eines $Ar^+$-Lasers ($\lambda$ = 488 nm) pixelweise jeweils 300 Sekunden lang bestrahlt. In der ersten Zeile des Feldes wurden die Punkte in der Reihenfolge der Spalten mit einer Leistung von 1, 2, 5, 10, 20, 50, 100 und 200 mW/cm$^2$ bestrahlt. In der zweiten Zeile wurde die Reihenfolge 2, 5, 10, 20, 50, 100, 200, 1 mW/cm$^2$ gewählt usw., bis schließlich die einzelnen Spalten der achten Zeile in mit 200, 1, 2, 5, 10, 20, 50 und 100 mW/cm$^2$ bestrahlt wurden. Es entstand ein Pixel-Muster, wobei die Doppelbrechung der einzelnen Pixel den im Beispiel 23 angegebenen Werten für die dazugehörige Laser-Leistung entsprach. Diese demonstriert, daß durch pixelweise Variation der Bestrahlungsintensität ein hinsichtlich der lokalen Vorzugsorientierung der Seitengruppen strukturierter Film erzeugt wird.

**Beispiel 32**

Durch Bestrahlung von zehn Pixeln eines wie in Beispiel 13 beschrieben präparierten Filmes des Polymers 19 mit Licht ($\lambda$ = 488 nm, P = 100 mW/cm$^2$, $T_{irr}$ = 300 s) jeweils unterschiedlicher Polarisationsrichtung in Bezug auf die Probe (0° bis 90° in Schritten zu 10°) wurden Pixel mit verschiedener Vorzugsrichtung in der Filmebene erzeugt, welche bei orthoskopischer Betrachtungsweise für Auslöschung und Verstärkung ein unterschiedliches, ihrer Orientierung entsprechendes Verhalten gegenüber der Drehung zwischen den Polarisatoren zeigten. Dies demonstriert, daß durch pixelweise Variation der Polarisationsrichtung des Anregungslichtes ein hinsichtlich der lokalen Vorzugsorientierung der Seitengruppen struktuierter Film erzeugt wird.

**Beispiel 33**

Alle in den Beispielen 20 bis 32 durch Bestrahlung erzeugten anisotropen Orientierungsverteilungen konnten durch ein Erwärmen der Polymere über die Glastemperatur und anschließendes Abkühlen (amorphe Polymere) bzw. Erwärmen über den Klärpunkt und schlagartiges Abkühlen unter die Glastemperatur (flüssigkristalline Polymere) beseitigt werden. Nach dieser Behandlung unterschieden sich die Polymerkörper hinsichtlich ihrer spektroskopischen und mikroskopischen Eigenschaften nicht mehr vom Zustand vor der Bestrahlung. Von den im Beispiel 32 erzeugten Pixel wurde jeder zweite durch Erwärmen mittels Bestrahlung durch einen $CO_2$-Laser ($\lambda$ = 1060 nm, P = 1 W/cm$^2$, $t_{irr}$= 5 s) beseitigt. Das Resultat war ein einheitlich isotroper Film mit den fünf nicht mit dem $CO_2$-Laser bestrahlten doppelbrechenden Pixeln. Dies demonstriert, daß die Gesamtheit der erzeugten Orientierungen oder einzelne Pixel durch flächiges oder lokales Erwärmen, wobei die benötigte Energie entweder direkt oder mittels einer geeigneten Lichtquelle zugeführt wird, beseitigt werden und somit der Ausgangszustand wiederhergestellt wird.

**Beispiel 34**

Die nach der in Beispiel 33 beschriebenen Bestrahlung nicht mit dem $CO_2$-Laser gelöschten Pixel, welche wie im Beispiel 32 beschrieben hergestellt worden waren, wurden mit dem unpolarisierten Lichtstrahl eines $Ar^+$-Lasesrs ($\lambda$ = 488 nm, P = 300 mW/cm$^2$, $t_{irr}$ = 300 s) bestrahlt. Nach dieser Bestrahlung zeigten die Pixel bei senkrechter Durchstrahlung keine doppelbrechenden Eigenschaften. Dies demonstriert, daß durch Bestrahlung mit unpolarisiertem aktinischem Licht primär erzeugte Vorzugsrichtungen aufgehoben und der Film entlang der Normalen wieder optisch isotrop wird.

**Beispiel 35**

Ein wie in Beispiel 13 beschrieben präparierter 15µm dicker Film des Polymers 20 wurde bei Raumtemperatur mit dem linear polarisierten Lichtstrahl eines $Ar^+$-Lasers ($\lambda$ = 488 nm; P = 100 mW/cm$^2$, d = 10 mm) 300 Sekunden lang bestrahlt. Auf diese Weise wurde eine Doppelbrechung von 0,04 induziert. Die im Polymerfilm erzeugte optische

Achse lag senkrecht zur Polarisationsebene des Anregungslichtes. Danach wurde die Polarisationsebene des Anregungslichtes um 45° gedreht und wiederum 300 Sekunden bestrahlt. Es wurde eine Doppelbrechung von 0,04 induziert, wobei die erzeugte optische Achse senkrecht zur Polarisationsebene des Anregungslichtes lag, also im Vergleich zum Resultat der ersten Bestrahlung um 45° gedreht wurde. Nun wurde die Polarisationsebene des Anregungslichtes wiederum um 45° im gleichen Richtungssinn gedreht und erneut 300 Sekunden bestrahlt. Das Ergebnis war eine Doppelbrechung von 0,04, wobei die erzeugte optische Achse senkrecht zu der nach der ersten Bestrahlung induzierten lag. Durch dreimaliges Drehen der Polarisationsebene des Anregungslichtes um jeweils 30° gefolgt von einer jeweils 300 Sekunden langen Bestrahlung wurde die optische Achse des Polymerfilms über zwei Zwischenstufen wieder in die Lage nach der ersten Bestrahlung gebracht. Die gleichen Schritte wurden nun bei konstanter Richtung der Polarisationsebene des Anregungslichtes durch Drehen des Polymerfilms um eine Achse parallel zur Ausbreitungsrichtung des Lichtes wiederholt. Beide Vorgehensweisen führten zu identischen Ergebnissen. Dies demonstriert, daß durch erneute Bestrahlung mit Licht der gleichen Quelle jedoch veränderter Polarisationsebene oder durch Veränderung der Lage des Polymerfilms in Bezug auf die Polarisationsebene des Einschreiblichtes zwischen verschiedenen Vorzugsrichtungen wiederholt geschaltet und somit die optische Anisotropie modifiziert werden kann.

**Beispiel 36**

100 verschiedene Stellen eines wie in Beispiel 14 beschrieben präparierten Filmes des Polymers 20 wurden mit dem linear polarisierten Lichtstrahl eines $Ar^+$-Lasers ($\lambda$ = 488 nm; P = 100 mW/$cm^2$, d = 10 $\mu$m) unterschiedlich lange bestrahlt. Es entstanden Pixel mit unterschiedlichen Werten der Doppelbrechung. Die Bestrahlungszeiten wurden so gewählt, daß für den 15 $\mu$m dicken Film 100 diskrete Werte der Phasenverschiebung für Licht der Wellenlänge 632,8 nm resultierten, die im Bereich zwischen völliger Auslöschung und völliger Transparenz für die Probe zwischen gekreuzten Polarisatoren lagen. Ein Abtasten des Polymerfilms mit dem Strahl des He/Ne-Lasers ergab für die einzelnen Pixel die Intensitäten 0,01 $I_0$, 0,02 $I_0$, 0,03 $I_0$, .... 0,98 $I_0$, 0,99 $I_0$, $I_0$, wobei $I_0$ die gemessene Intensität des Lasers nach dem Passieren des amorphen Films zwischen parallelen Polarisatoren ist. Dies demonstriert, daß in einem Pixel bis zu 100 verschiedene auslesbare Graustufen reproduzierbar eingeschrieben werden können.

**Beispiel 37**

Zur pixelweisen Strukturierung wurde ein wie in Beispiel 13 hergestellter Film des Polymers 19 an zehn verschiedenen Punkten mit einem auf 100 $\mu$m verjüngten Laserstrahl ($\lambda$ = 488 nm; P = 200 mW/$cm^2$) für eine jeweils konstante Zeit ($t_{irr}$ = 300 s) belichtet.

Dies führten zu zehn Pixeln mit identischen Werten der Doppelbrechung, die bei orthoskopischer und konoskopischer Betrachtung ein gleichartiges Verhalten bei der Drehung zwischen gekreuzten Polarisatoren zeigten.

**F) Speicherung bildhafter Informationen**

**Beispiel 38**

Eine bildhafte Informationsspeicherung mittels einer Testmaske erfolgte in einem wie in Beispiel 13 beschrieben hergestellten Film des Polymers 1 und in einem wie in Beispiel 16 beschrieben hergestellten Film des Polymers 20.

Die Testmaske (Linienpaarmuster) wurde hierzu auf dem Polymerpräparat fixiert, so daß es homogen auflag (Kontaktübertragung).

Die Speicherung der in der Maske enthaltenen bildhaften Informationen erfolgte durch Bestrahlung mit linear polarisiertem aktinischem Licht eines $Ar^+$-Ionenlaser ($\lambda$ = 488 nm; P = 100 mW/$cm^2$), dessen Strahl zur bildhaften Orientierung derart aufgeweitet wurde, daß die Musterfläche homogen ausgestrahlt wurde.

Die Bestrahlungszeit betrug 3 Minuten, die Filmtemperatur lag 10 K unterhalb des jeweiligen Glasübergangs.

Nach der Bestrahlung wurde die in den Film eingeschriebene Information unter dem Polarisationsmikroskop betrachtet. Eine Auflösung von 2 $\mu$m war problemlos möglich.

**Beispiel 39**

Eine bildhafte Informationsspeicherung erfolgte wie in Beispiel 38 mit dem Unterschied, daß an Stelle der Testmaske ein Photonegativ verwendet wurde.

Die eingeschriebenen Bilder wurden zwischen gekreuzten Polarisatoren als Negativ (analog der Vorlage) und zwischen parallelen Polarisatoren als Positiv sichtbar. Entsprechend der Vorlage weist die eingeschriebene Information eine kontinuierliche Grauskala auf. Das zeigt, daß je nach einwirkender Strahlungsdosis jeder beliebige Wert der Doppelbrechung zwischen 0 und $\Delta n_{max}$ einstellbar ist.

Die eingeschriebenen Bilder sind seit über einem Jahr stabil.

**G) Herstellung anisotroper optischer Komponenten**

**Beispiel 40**

Zur Erzeugung von passiven anisotropen optischen Komponenten wurde ein Präparat des Polymers 20 verwendet, das wie unter Beispiel 14 beschrieben präpariert wurde (Schichtdicke 10 $\mu$m).

Bestrahlt wurde mit dem linear polarisierten aufgeweiteten Strahl eines $Ar^+$-Ionenlasers (P = 100 mW/$cm^2$) und zwar so lange, bis die durch die lichtinduzierte Orientierung des amorphen Films erzeugte Doppelbrechung bei 633 nm eine Phasenverschiebung von $\lambda/4$ oder $\lambda/2$ bewirkt.

So konnte die Lage der Polarisationsebene des linear polarisiertem nichtaktinischen Lichtes um 90° gedreht werden ($\lambda/2$) bzw. aus linear polarisiertem Licht circular polarisiertes erzeugt werden ($\lambda/4$). Diese Ergebnisse wurden durch Intensitätsmessungen am Analysator überprüft.

**H) Meßprinzipien**

**Beispiel 41**

Die in den Ausführungsbeispielen 20 bis 26, 29 bis 31, 35 und 38 erzeugten Anisotropien der Polymerfilme wurden während der Bestrahlung durch Messung der Phasenverschiebung detektiert, die der Strahl eines He/Ne-Lasers (P = 1 mW/$cm^2$, $\lambda$ = 633 nm, Strahlendurchmesser d = 0,5 mm) bei senkrechter Transmission durch den Film erleidet. Die Polarisationsebene des Meßlichts bildete die Winkelhalbierende zwischen den beiden Hauptachsen der erzeugten Anisotropie.

Die Messung der Intensität des Meßstrahls erfolgte nach dem Passieren eines Analysators für jeweils vier Polarenstellungen (0° und 90° sowie +/- 45°). Aus den gemessenen Intensitäten wurden aus Lichtstreuung resultierende Intensitätsverluste eliminiert und die Phasenverschiebung und die Doppelbrechung mit Hilfe der Fresnell'schen Gleichung berechnet.

**Beispiel 42**

Die nach den Ausführungsbeispielen 38 und 39 in den Polymerfilmen gespeicherten bildhaften Informationen (Testmaske, Photonegativ) wurden mit nichtaktinischem linear polarisierten Licht eines aufgeweiteten He/Ne-Lasers ($\lambda$ = 633 nm, P = $10^{-3}$ mW/$cm^2$) nach dem Passieren eines Analysators flächig auf einen Schirm abgebildet.

Je nach der Stellung der Polaren zueinander (0° oder 90°) ließ sich das Positiv- oder Negativbild der Maske bzw. des Photos erzeugen.

**I) Zyklische Reversibilität**

**Beispiel 43**

In einem entsprechend Beispiel 13 hergestellten und nach Beispiel 29 flächig orientierten Film des Polymers 10 wurde durch Bestrahlung mit einem Argon-Ionen-Laser ($\lambda$ = 488 nm, P = 200 mW/$cm^2$, t = 90 s) mit jeweils 90° gedrehter Polarisationsebene die Brechungsindexanisotropie bezogen auf ein feststehendes Koordinationssystem zyklisch zwischen -0,01 und +0,01 geschaltet. Der zeitliche Verlauf der Phasenverschiebung und die Maximal- bzw. Minimalwerte der Transmission des He/Ne-Lasers durch die Anordnung Polarisator-Film-Analysator war über 150 Zyklen mit einer Abweichung unter 5 % reproduzierbar.

Die Bestrahlung wurde in einem weiteren Experiment während eines Zyklus an einer Stelle unterbrochen, an der der Film keine Doppelrechung zeigte. Dies ist gleichbedeutend mit einer photonischen Löschung der gespeicherten Information.

Wurde die Bestrahlung nach einer solchen Unterbrechung mit einer um 90° gedrehten Polarisationsebene des aktinischen Lichtes wieder aufgenommen, konnte die Doppelbrechung wieder erreicht werden, die der Film vor der vorhergehenden Bestrahlung zeigte (0,01 bzw. -0,01).

Dies beweist eine hohe zyklsiche Reversibilität der beanspruchten Systeme und zeigt die Möglichkeit zur Realisierung reversibler optischer Datenspeicher und optisch schaltbarer anisotroper optischer Komponenten auf der Grundlage dieser Systeme.

**K) Andere aktinische Lichtquellen**

**Beispiel 44**

Ein flächiges Orientieren der amorphen Polymerfilme entsprechend Beispiel 29 wurde auch durch Bestrahlung mit dem linear polarisierten Licht einer Quecksilberlampe ($\lambda$ = 365 nm) realisiert.

**Beispiel 45**

Ein pixelweises Orientieren der amorphen Polymerfilme entsprechend Beispiel 33 und ein zyklisches Schalten der Pixel zwischen verschiedenen Orientierungszuständen entsprechend Beispiel 43 wurde durch Bestrahlung im Polarisationsmikroskop (100 W Halogenlampe als aktinische Strahlungsquelle) unter Verwendung eines Steilkantenfilters für den UV-Anteil realisiert.

**L) Lichtsensitivität der Polymere**

**Beispiel 46**

Zur Einschätzung der Sensitivität der Polymere wurden ein nach Beispiel 14 präparierter Film der Polymere 10 und 11 und ein nach Beispiel 13 präparierter Film des Polymers 12 solange mit dem linear polarisierten Licht eines $Ar^+$-Ionen-Lasers ($\lambda$ = 488 nm; P = 250 $mW/cm^2$) bestrahlt, bis das Licht des He/Ne-Lasers eine Phasenverschiebung von $\Delta f = \pi/6$ erlitt. Die dazu notwendigen Zeiten wurden gemessen und sind in der folgenden Tabelle mit den daraus resultierenden Energiedosen zusammengestellt.

| Polymer | 10 | 11 | 12 |
|---|---|---|---|
| $t(\pi/6)/s$ | 10,5 | 5,3 | 2,3 |
| $E = t\ P/Jcm^{-2}$ | 2,6 | 1,3 | 0,6 |

**Beispiel 47**

Zur weiteren Beurteilung der Sensitivität der Polymere wurde ein Verfahren benutzt, welches zu Daten führt, die zur Charakterisierung der Sensitivität von üblichen fotographischen Filmen herangezogen werden. Dieses Verfahren berücksichtigt die spezifischen Effekte, die der photographischen Nutzbarkeit der beanspruchten Polymere zugrund liegen und unterscheidet sich somit von dem für herkömmliche Filme benutzten.

Dazu wurden die in Beispiel 46 untersuchten Polymerfilme unter den dort beschriebenen Bedingungen bis zu einer Phasenverschiebung von $\pi/2$ bestrahlt. Die Transmission des He/Ne-Lasers durch das System Polarisator-Polymerfilm-Analysator (Polarisator und Analysator gekreuzt; Polarisationsrichtung des Einschreib-Lichtes ist die Winkelhalbierende) wurde gemessen und ihr dekadischer Logaritmus ($\log I/I_o$) gegen den dekadischen Logaritmus der Energiedosis (log E) aufgetragen. Vor der Bestrahlung betrug $\log (I/I_o)_{E=O}=-2$. Dieser Wert wird bei der Beurteilung fotografischer Filme als Grauschleier bezeichnet. Den gleichen Wert ergab auch eine Messung der Intensität ohne einen zwischen den Polarisationsfolien befindlichen Polymerfilm. Er wird somit durch die Qualität (Polarisationsgrad) dieser Folien bestimmt.

Im Verlauf der Bestrahlung stieg $\log (I/I_o)$ nahezu linear auf 0 an. Es wurde nun die Energie bestimmt, die nötig war, um eine über dem Rauschen liegende Veränderung von $\log (I/I_o)$ zu erzeugen. Definitionsgemäß ist dies eine Veränderung von $\{\log(I/I_o)\}_{E=O}$ auf $\{\log(I/I_o)\}_{E=O} + 0,1$. Diese Energiedosis H* wird bei der sensitometrischen Prüfung fotografischer Filme zur Berechnung der Sensitivität S=1/H* benutzt. In der folgenden Tabelle sind für die drei untersuchten Polymere die Werte von H* und S zusammengestellt.

| Polymer | 10 | 11 | 12 |
|---|---|---|---|
| $H^*[Jcm^{-2}]$ | 0,59 | 0,40 | 0,19 |
| $S[cm^2J^{-1}]$ | 1,7 | 2,5 | 5,2 |

**Patentansprüche**

1. Flächenhafte Gebilde aus einem Polymer mit einer Hauptkette und von der Hauptkette abzweigenden Seitengruppen (Seitengruppenpolymer) das folgende Strukturmerkmale (1) bis (3) aufweist:

(1) das Seitengruppenpolymer enthält wenigstens eine photoinduzierbar konfigurationsveränderliche Seitengruppe;

(2) das Seitengruppenpolymer enthält wenigstens eine von (1) verschiedene permanent formanisotrope Seitengruppe mit hoher Anisotropie der molekularen Polarisierbarkeit;

(3) das Seitengruppenpolymer enthält zwischen Hauptkette und den Seitengruppen (1) und (2) flexible Abstandsgruppen;

**dadurch gekennzeichnet, daß** das flächenhafte Gebilde im Glaszustand der Seitengruppenpolymeren vor Bestrahlung optisch isotrop, transparent, nicht streuend und amorph und nach Bestrahlung transparent und durch eine im Glaszustand reversible lichtinduzierte Ausrichtung der Seitengruppen (1) und (2) langzeitstabil doppelbrechend und dichroitisch ist.

**2.** Flächenhaftes Gebilde gemäß Anspruch 1, das wenigstens ein weiteres Strukturmerkmal (4), ausgewählt aus den Gruppen (a) bis (g) aufweist:

(a) es werden wenigstens zwei Arten von Abstandsgruppen (3) unterschiedlicher Länge eingebaut;

(b) wenigstens ein Teil der Abstandsgruppen (3) weist Heteroatome auf;

(c) wenigstens ein Teil der Abstandsgruppen (3) weist Verzweigungen auf;

(d) wenigstens ein Teil der Seitengruppen (1) oder (2) weist Verzweigungen auf;

(e) wenigstens ein Teil der Seitengruppen (1) oder (2) endet in verzweigten Endgruppen.

(f) wenigstens ein Teil der Monomerbausteine des Seitengruppenpolymers bildet keine flüssig-kristallinen Phasen aus;

(g) das Seitengruppenpolymer enthält eine weitere Seitengruppe (5), die keine permanente Formanisotropie aufweist.

**3.** Flächenhaftes Gebilde aus einem Seitengruppenpolymer gemäß Anspruch 1, **dadurch gekennzeichnet, daß** die Hauptkette des Seitengruppenpolymers von Monomeren, die die Seitengruppe (1) über Abstandsgruppen (3) tragen, von Monomeren, die die Seitengruppe (2) über Abstandsgruppen (3) tragen und gegebenenfalls weiteren Monomeren gebildet wird.

**4.** Flächenhaftes Gebilde aus einem Seitengruppenpolymer gemäß Anspruch 3, **dadurch gekennzeichnet, daß** der Anteil der Monomere, die die Seitengruppe (1) aufweisen, 10 bis 80 Mol-%, der Anteil der Monomere, die die Seitengruppe (2) aufweisen, 20 bis 90 Mol-% und der Anteil der weiteren Monomere 0 bis 50 Mol-% betragen.

**5.** Flächenhaftes Gebilde aus einem Seitengruppenpolymer gemäß Anspruch 1, **dadurch gekennzeichnet, daß** die Hauptkette ein Poly-(meth)acrylat, ein Polysiloxan, ein Poly-$\alpha$-Oxiran, ein Polyether, ein Polyamid, ein Polyurethan, ein Polyester oder ein Polycarbonat ist, die Seitengruppe (1) einschließlich der flexiblen Abstandsgruppe (3) der Formel (I) und die Seitengruppe (2) einschließlich der flexiblen Abstandsgruppe (3) der Formel (II) entsprechen:

$$-S_1-Q_1-P-X_1 \quad (I)$$

$$-S_2-Q_2-M-X_2 \quad (II)$$

worin

$S_1$, $S_2$ eine abstandshaltende Gruppe,

$Q_1$, $Q_2$ -O-, -CO-O-, -O-CO-, -CO-$NR_1$-, -$NR_1$-CO- oder -$NR_1$-,

P eine photoinduzierbar konfigurationsveränderliche Gruppe,

M eine von P verschiedene, permanent formanisotrope Gruppe,

$X_1$, $X_2$ ein endständiger Substituent und

$R_1$ Wasserstoff oder $C_1$-$C_4$-Alkyl bedeuten.

**6.** Flächenhaftes Gebilde aus einem Seitengruppenpolymer gemäß Anspruch 5, **dadurch gekennzeichnet, daß**

$S_1$, $S_2$ eine gegebenenfalls durch -O-, -NH- oder -$Si(R_5)_2$- unterbrochene Gruppe -$(CH_2)_n$-,

n 2 bis 14,

P -Ar(N=N-Ar)$_m$-, -ArN=$CR_2$-Ar-, -Ar-$CR_2$=N-Ar-, -Ar-$CR_2$=$CR_3$-$COOR_4$-, -Ar-(CH=CH-Ar)$_m$, -Ar$CR_2$=$CR_3$-Ar, -Ar-$CR_2$=$CR_3$-$COR_4$ oder -Ar-$CR_2$=$CR_3$-Cyclohexyl,

$R_2$, $R_3$, $R_4$ H, $C_1$-$C_4$-Alkyl, CN, $OR_2$, $COOR_4$, Halogen, $NO_2$ oder $N(R_5)$,

$R_5$ H oder $C_1$-$C_4$-Alkyl,

Ar ein gegebenenfalls substituiertes aromatisches Ringsystem mit 5 oder 6 Ringgliedern,

m 1 oder 2,

M ein Derivat des Cholesterols oder des Cholestans oder eine der Gruppen -Ar-Ar-, -Ar-Y-Ar-, Ar-Y-Alk-, -Alk-Y-Ar-, -Alk-Ar- oder -Ar-Alk-,

Y -CO-O-, -OCO-, -CONH-, -NHCO-, -N=CH-, -CH=N-, -N- NO-, -$C(R_5)_2$-, -$C(R_5)_2$-$C(R_5)_2$-, -O- oder -$NR_1$-,

Alk eine geradkettige, verzweigte oder cyclische, gegebenenfalls substituierte, gegebenenfalls olefinisch ungesättigte aliphatische Gruppe mit 1 bis 14 C-Atomen,

$X_1$, $X_2$ Wasserstoff, CN, Alk, Y-Alk, Aryl, Y-Ar, -$N(Alk)_2$, Halogen oder $NO_2$ bedeuten.

**7.** Flächenhaftes Gebilde aus einem Seitengruppenpolymer gemäß Anspruch 5, **dadurch gekennzeichnet, daß** die Hauptkette ein Poly(meth)acrylat ist,

P -Ar-(N=N-Ar)$_m$-, Ar-$CR_2$=$CR_3$-Ar- oder -Ar-$CR_2$=$CR_3$-$COOR_4$,

M einen Rest des Biphenyls, eines Benzoesäureanilids oder eines Benzoesäurephenylesters,

$X_1$, $X_2$ H, CN, $C_1$-$C_8$-Alkyl, $C_1$-$C_8$-Alkoxy, $C_5$-$C_7$-Cycloalkoxy, Phenyl, Phenoxy, $C_1$-$C_4$-Di-alkylamino oder Nitro bedeuten.

**8.** Flächenhaftes Gebilde aus einem Seitengruppenpolymer gemäß Anspruch 1, **dadurch gekennzeichnet, daß** das Seitengruppenpolymer eine Glastemperatur Tg von $\geq 40°C$ hat.

**9.** Flächenhaftes Gebilde aus einem Seitengruppenpolymer gemäß Anspruch 1, **dadurch gekennzeichnet, daß** zwischen den Seitengruppen (1) und (2) schwache Wechselwirkungskräfte auftreten, die ausreichen, daß die photoinduzierte Konfigurationsänderung der Seitengruppe 1 eine gleichgerichtete Umorientierung der Seitengruppe 2 bewirkt.

**10.** Flächenhaftes Gebilde nach Anspruch 9, wobei die photoinduzierte Konfigurationsänderung der Seitengruppe 1 und die gleichgerichtete Umorientierung der Seitengruppe 2 eine Doppelbrechungsänderung von $\Delta n$ = 0,01 bis 0,2 bewirken.

**11.** Flächenhaftes Gebilde nach Anspruch 1, hergestellt durch Vergießen einer isotropen Schmelze eines Seitengruppenpolymers gemäß Anspruch 1 und Abkühlen mit einer Geschwindigkeit von > 100 K/min.

**12.** Verfahren zur Generierung und Modifizierung von Ordnungszuständen und zur Modulation der optischen Eigenschaften der flächenhaften Gebilde nach Ansprüchen 1 bis 10, **dadurch gekennzeichnet, daß** Licht auf die flächenhaften Gebilde einwirkt.

**13.** Verfahren nach Anspruch 12, wobei das Licht je nach der zu erzielenden Wirkung linear oder circular polarisiertes oder unpolarisiertes Licht in einem Wellenlängenbereich, in dem die Seitengruppe (1) absorbiert, ist.

## Claims

**1.** A flat material made from a polymer with a backbone and side groups branching off the backbone (side group polymer), which polymer has the following structural features (1) to (3):

(1) the side group polymer contains at least one photoinducibly configuration-changing side group;

(2) the side group polymer contains at least one permanently conformationally anisotropic side group with high anisotropy of molecular polarisability which differs from (1);

(3) the side group polymer contains flexible spacer groups between the backbone and the side groups (1) and (2) ;

**characterised in that** the flat material in the glassy state of the side group polymers is optically isotropic, transparent, non-scattering and amorphous before irradiation and, after irradiation, is transparent and durably birefringent and dichroic due to a reversible, photoinduced alignment of the side groups (1) and (2) in the glassy state.

**2.** A flat material according to claim 1 which has at least one further structural feature (4) selected from the group (a) to (g) :

(a) at least two kinds of spacer groups (3) of differing length are incorporated;

(b) at least some of the spacer groups (3) have heteroatoms;

(c) at least some of the spacer groups (3) are branched;

(d) at least some of the side groups (1) or (2) are branched;

(e) at least some of the side groups (1) or (2) are terminated with branched end groups;

(f) at least some of the monomer units of the side group polymer do not form liquid crystalline phases;

(g) the side group polymer contains further side groups (5) which do not exhibit permanent conformational anisotropy.

**3.** A flat material made from a side group polymer according to claim 1, **characterised in that** the backbone of the side group monomers is formed of monomers bearing the side groups (1) via spacer groups (3), of monomers bearing the side groups (2) via spacer groups (3) and optionally further monomers.

**4.** A flat material made from a side group polymer according to claim 3, **characterised in that** the proportion of monomers with side group (1) is 10 to 80 mol%, the proportion of monomers with side group (2) is 20 to 90 mol% and the proportion of further monomers is 0 to 50 mol%.

**5.** A flat material made from a side group polymer according to claim 1, **characterised in that** the backbone is a poly (meth)acrylate, a polysiloxane, a poly-α-oxirane, a polyether, a polyamide, a polyurethane, a polyester or a polycarbonate, the side group (1), including the flexible spacer group (3), corresponds to the formula (I) and the side group (2), including the flexible spacer group (3), corresponds to the formula (II):

$$-S_1-Q_1-P-X_1 \quad (I)$$

$$-S_2-Q_2-M-X_2 \quad (II)$$

in which

$S_1$, $S_2$ mean a spacer group,

$Q_1$, $Q_2$ mean -O-, -CO-O-, -O-CO-, -CO-$NR_1$-, -$NR_1$-CO- or -$NR_1$-,

P means a photoinducibly configuration-changing group,

M means a permanently conformationally anisotropic group differing from P,

$X_1$, $X_2$ mean a terminal substituent and

$R_1$ means hydrogen or $C_1$-$C_4$ alkyl.

**6.** A flat material made from a side group polymer according to claim 5, **characterised in that**

$S_1$, $S_2$ mean a group -$(CH_2)_n$-, optionally interrupted with -O-, -NH- or -$Si(R_5)_2$-,

n means 2 to 14,

P means -Ar(N=N-Ar)$_m$-, -ArN=$CR_2$-Ar-, -Ar-$CR_2$=N-Ar-, -Ar-$CR_2$=$CR_3$-$COOR_4$, -AR-(CH=CH-Ar)$_m$, -Ar$CR_2$=$CR_3$-Ar, -Ar-$CR_2$=$CR_3$-$COR_4$ or -Ar-$CR_2$=$CR_3$-cyclohexyl,

$R_2$, $R_3$, $R_4$ mean H, $C_1$-$C_4$ alkyl, CN, $OR_2$, $COOR_4$, halogen, $NO_2$ or $N(R_5)$,

$R_5$ means H or $C_1$-$C_4$ alkyl,

Ar means an optionally substituted aromatic ring system with 5 or 6 ring members,

m means 1 or 2,

M means a derivative of cholesterol or cholestane or one of the groups -Ar-Ar-, -Ar-Y-Ar-, -Ar-Y-Alk-, -Alk-Y-Ar-, -Alk-Ar- or -Ar-Alk-,

Y means -CO-O-, -OCO-, -CONH-, -NHCO-, -N=CH-, -CH=N-, -N-NO-, -$C(R_5)_2$-, -$C(R_5)_2$-$C(R_5)_2$-, -O- or -$NR_1$-,

Alk means an unbranched, branched or cyclic, optionally substituted, optionally olefinically unsaturated aliphatic group with 1 to 14 C atoms,

$X_1$, $X_2$ mean hydrogen, CN, Alk, Y-Alk, aryl, Y-Ar, -$N(Alk)_2$, halogen or $NO_2$.

**7.** A flat material made from a side group polymer according to claim 5, **characterised in that** the backbone is a poly (meth)acrylate,

P means -Ar-(N=N-Ar)$_m$, -Ar-$CR_2$=$CR_3$-Ar- or -Ar-$CR_2$=$CR_3$-$COOR_4$,

M means a residue of a biphenyl, benzoic acid anilide or a benzoic acid phenyl ester,

$X_1$, $X_2$ mean H, CN, $C_1$-$C_8$ alkyl, $C_1$-$C_8$-alkoxy, $C_5$-$C_7$ cycloalkoxy, phenyl, phenoxy, $C_1$-$C_4$ dialkylamino or nitro.

**8.** A flat material made from a side group polymer according to claim 1, **characterised in that** the side group polymers has a glass transition temperature $T_g$ of ≥40°C.

**9.** A flat material made from a side group polymer according to claim 1, **characterised in that** weak interactive forces arise between side groups (1) and (2) which are sufficient to ensure that a photoinduced configuration change of side group 1 brings about an identically directed reorientation of side group 2.

**10.** A flat material according to claim 9, wherein the photoinduced configuration change of side group 1 and the identically directed reorientation of side group 2 bring about a change in birefringence of $\Delta n$ = 0.01 to 0.2.

**11.** A flat material according to claim 1, produced by casting an isotropic melt of a side group polymer according to claim 1 and cooling at a rate of > 100 K/min.

**12.** A process for generating and modifying ordered states and for modulating the optical properties of the flat materials according to claims 1 to 10, **characterised in that** light acts upon the flat materials.

**13.** A process according to claim 12, wherein, depending on the effect to be achieved, the light is linearly or circularly polarised or unpolarised light of a wavelength range absorbed by side group (1).

## Revendications

**1.** Structures en couche contenant un polymère avec une chaîne principale et des groupes latéraux ramifiés sur la chaîne principale (polymère à groupes latéraux) qui présente les caractéristiques structurelles suivantes (1) à (3) :

(1) le polymère à groupes latéraux contient au moins un groupe latéral à configuration modifiable par photoinduction ;
(2) le polymère à groupes latéraux contient au moins un groupe latéral de forme anisotrope permanente, différent de (1), avec une anisotropie élevée de la polarisabilité moléculaire ;
(3) le polymère à groupes latéraux contient entre la chaîne principale et les groupes latéraux (1) et (2) des groupes écarteurs flexibles ;

**caractérisées en ce que** la structure en couche dans un état vitreux des polymères à groupes latéraux est avant l'irradiation isotrope optiquement, transparente, non dispersante et amorphe et après l'irradiation est transparente et est, dans un état vitreux, biréfringente et dichroïque de manière stable dans le temps par une orientation réversible induite par la lumière des groupes latéraux (1) et (2).

**2.** Structures en couche selon la revendication 1, qui présentent au moins une autre caractéristique structurelle (4) choisie dans les groupes (a) à (g):

(a) elles contiennent au moins deux sortes de groupes écarteurs (3) de longueurs différentes ;
(b) au moins une partie des groupes écarteurs (3) présente des hétéroatomes ;
(c) au moins une partie des groupes écarteurs (3) présente des ramifications ;
(d) au moins une partie des groupes latéraux (1) ou (2) présente des ramifications ;
(e) au moins une partie des groupes latéraux (1) et (2) est terminée par des groupes terminaux ramifiés ;
(f) au moins une partie des monomères de formation du polymère à groupes latéraux ne forme pas de phases à cristaux liquides ;
(g) le polymère à groupes latéraux contient un autre groupe latéral (5) qui ne présente pas d'anisotropie de forme permanente.

**3.** Structures en couche comprenant un polymère à groupes latéraux selon la revendication 1, **caractérisées en ce que** la chaîne principale du polymère à groupes latéraux est formée à partir de monomères qui portent les groupes latéraux (1) sur les groupes écarteurs (3), de monomères qui portent les groupes latéraux (2) sur les groupes écarteurs (3) et éventuellement d'autres monomères,

4. Structures en couche comprenant un polymère à groupes latéraux selon la revendication 3, **caractérisées en ce que** la quantité des monomères qui présentent les groupes latéraux (1) est de 10 à 80% en moles, la quantité des monomères qui présentent les groupes latéraux (2) est de 20 à 90% en moles et la quantité des autres monomères est de 0 à 50% en moles.

5. Structures en couche comprenant un polymère à groupes latéraux selon la revendication 1, **caractérisées en ce que** la chaîne principale est un poly(méth)acrylate, un polysiloxane, un poly-$\alpha$-oxirane, un polyéther, un polyamide, un polyuréthane, un polyester ou un polycarbonate, les groupes latéraux (1) y compris les groupes écarteurs flexibles (3) correspondent à la formule (I) et les groupes latéraux (2) y compris les groupes écarteurs flexibles (3) correspondent à la formule (II):

$$-S_1-Q_1-P-X_1 \quad (I)$$

$$-S_1-Q_2-M-X_2 \quad (II)$$

dans lesquelles
$S_1$, $S_2$ sont un groupe contenant un écarteur,
$Q_1$, $Q_2$ sont -O-, -CO-O-, -O-CO-, -CO-$NR_1$-, -$NR_1$-CO- ou -$NR_1$-,
P est un groupe à configuration variable par photo-induction,
M est un groupe de forme anisotrope permanente, différent de P,
$X_1$, $X_2$ sont un substituant de fin de chaîne et
$R_1$ est l'hydrogène ou un groupe alkyle en $C_1$-$C_4$.

6. Structures en couche comprenant un polymère à groupes latéraux selon la revendication 5, **caractérisées en ce que**
$S_1$, $S_2$ est un groupe $-(CH_2)_n-$ éventuellement interrompu par -O-, -NH- ou $-Si(R_5)_2-$,
n vaut 2 à 14,
P est $-Ar(N=N-Ar)_m$, $-ArN=CR_2-Ar-$, $-Ar-CR_2=N-Ar-$,
$-Ar-CR_2=CR_3-COOR_4-$, $-Ar-(CH=CH-Ar)_m$, $-ArCR_2=CR_3-Ar$,
$-Ar-CR_2=CR_3-COR_4$ ou $-Ar-CR_2=CR_3$-cyclohexyle,
$R_2$, $R_3$, $R_4$ sont H, un alkyle en $C_1$-$C_4$, CN, $OR_2$, $COOR_4$, un halogène, $NO_2$ ou $N(R_5)$,
$R_5$ est H ou un alkyle en $C_1$-$C_4$,
Ar est un système cyclique aromatique éventuellement substitué avec 5 ou 6 chaînons cycliques,
m vaut 1 ou 2,
M est un dérivé de cholestérol ou de cholestane ou un des groupes -Ar-Ar-, -Ar-Y-Ar-, Ar-Y-Alk-, -Alk-Y-Ar-, -Alk-Ar- ou -Ar-Alk-, Y est -CO-O-, -OCO-, -CONH-, -NHCO-, -N=CH-, -CH=N-, -N-NO-, $-C(R_5)_2-$, $-C(R_5)_2-C(R_5)_2-$, -O- ou -NR1-,
Alk est un groupe aliphatique à chaîne linéaire, ramifié ou cyclique, éventuellement substitué, éventuellement insaturé oléfiniquement avec 1 à 14 atomes de carbone,
$X_1$, $X_2$ sont l'hydrogène CN, Alk, Y-Alk, aryle, Y-Ar, $-N(Alk)_2$, un halogène ou $NO_2$,

7. Structures en couche comprenant un polymère à groupes latéraux selon la revendication 5, **caractérisées en ce que** la chaîne principale est un poly(méth)acrylate,
P est-$Ar-(N=N-Ar)_m-$, $Ar-CR_2=CR_3-Ar-$ ou $-Ar-CR_2=CR_3-COOR_4$,
M est un reste de biphényle, d'anilide d'acide benzoïque ou d'un ester phénylique d'acide benzoïque,
$X_1$, $X_2$ sont H, CN, un alkyle en $C_1$-$C_8$, alcoxy en $C_1$-$C_8$, cycloalcoxy en $C_5$-$C_7$, phényle, phénoxy, di-alkylamino en $C_1$-$C_4$ ou nitro.

8. Structures en couche comprenant un polymère à groupes latéraux selon la revendication 1, **caractérisées en ce que** le polymère à groupes latéraux a une température de transition vitreuse $Tg \geq 40°C$.

9. Structures en couche comprenant un polymère à groupes latéraux selon la revendication 1, **caractérisées en ce qu'**entre les groupes latéraux (1) et (2) se présentent des forces d'action réciproque faibles qui suffisent pour que la modification de configuration photo-induite des groupes latéraux 1 provoque une réorientation dans la même direction des groupes latéraux 2.

**10.** Structures en couche comprenant un polymère à groupes latéraux selon la revendication 9, dans lesquelles la modification de configuration photo-induite des groupe latéraux 1 et la réorientation dans la même direction des groupes latéraux 2 génère une modification de la biréfringence de $\Delta n$ = 0,01 à 0,2.

**11.** Structures en couche selon la revendication 1, préparée par coulée d'un produit fondu isotrope d'un polymère à groupes latéraux selon la revendication 1 et par refroidissement avec une vitesse de > 100 K/min.

**12.** Procédé de génération et de modification d'états ordonnés et de modulation des propriétés optiques des structures en couche selon les revendications 1 à 10, **caractérisé en ce que** la lumière agit sur les structures en couche.

**13.** Procédé selon la revendication 12, dans lequel la lumière selon l'action à atteindre, est une lumière non polarisée ou polarisée linéairement ou circulairement, dans un domaine de longueur d'onde dans lequel le groupe latéral absorbe.